# EUROPÄISCHE PATENTSCHRIFT

(11) **EP 3 617 926 B1**
(45) Veröffentlichungstag und Bekanntmachung des Hinweises auf die Patenterteilung: **15.07.2020**
(21) Anmeldenummer: 18192002.6
(22) Anmeldetag: 31.08.2018
(51) Int. Cl.: G06F 21/64, H04L 9/32

(54) **BLOCKBILDUNGS-EINRICHTUNG UND -VERFAHREN, KNOTENEINRICHTUNG UND BLOCKBESTÄTIGUNGS-VERFAHREN**
BLOCK FORMING DEVICE AND METHOD, NODE DEVICE AND BLOCK CONFIRMATION METHOD
DISPOSITIF ET PROCÉDÉ DE FORMATION DE BLOCS, DISPOSITIF NOEUD ET PROCÉDÉ DE CONFIRMATION DE BLOCS

(43) Veröffentlichungstag der Anmeldung: 04.03.2020
(73) Patentinhaber: Siemens Aktiengesellschaft, 80333 München (DE)
(72) Erfinder: Falk, Rainer, 85586 Poing (DE)

(56) Entgegenhaltungen:
- DE-A1-102016 118 613
- DE-A1-102016 215 917
- ELLI ANDROULAKI ET AL: "Hyperledger fabric : a distributed operating system for permissioned blockchains", PROCEEDINGS OF THE THIRTEENTH EUROSYS CONFERENCE ON , EUROSYS '18, 26. April 2018 (2018-04-26), Seiten 1-15, XP055554083, New York, New York, USA DOI: 10.1145/3190508.3190538 ISBN: 978-1-4503-5584-1

## Beschreibung

Die vorliegende Erfindung betrifft das Gebiet der industriellen Automatisierungstechnik und im Speziellen eine Blockbildungs-Einrichtung, ein Blockbildungs-Verfahren, eine Knoteneinrichtung und ein Blockbestätigungs-Verfahren für ein verteiltes Datenbanksystem mit Zeittaktung.

Industrielle Anwendungen, wie industrielle Automatisierungssysteme, stellen an die zur Steuerung bzw. Regelung verwendete Informationstechnik besondere Anforderungen hinsichtlich funktionaler Sicherheit, Verfügbarkeit und Echtzeitfähigkeit.

In einem mit Blockketten-Technologie implementierten verteilten Datenbanksystem können Transaktionen ohne Clearing-Stelle oder besonderes Vertrauensverhältnis zwischen den Transaktionspartnern basierend auf einem Konsens zwischen den Transaktionspartnern manipulationsgeschützt realisiert werden. Denkbar ist, in durch Blockketten-Technologie geschützten Transaktionsdatensätzen Mess-/Steuerwerte sowie, etwa als sogenannte Smart Contracts, Steuerbefehle für ein industrielles Automatisierungssystem zu speichern. Jedoch mangelt es bekannter Blockketten-Technologie an der für industrielle Steuerungen erforderlichen Echtzeitfähigkeit. Insbesondere kann eine Proof-of-Work-basierte Blockkette Transaktionen lediglich im Mittel in gewissen Intervallen bestätigen, jedoch kann nicht exakt vorgegeben werden, zu welchen Zeitpunkten eine Transaktion zu bestätigen bzw. ein Smart Contract auszuführen ist.

Elli Androulaki et al., "Hyperledger Fabric: A Distributed Operating System for Permissioned Blockchains", Proceedings of the Thirteenth Eurosys Conference on Eurosys '18, April 23-26, 2018, Porto, Portugal, offenbart ein Fabric für den Betrieb von zugangsbeschränkten Blockchain-Datenbanksystemen.

Das Fabric arbeitet mit einer Execute-Order-Validate-Architektur, bei welcher das Prüfen von Transaktionen, das Ordnen von Transaktionen in Blöcke und das Validieren der Blöcke voneinander getrennt sind. Lediglich das Ordnen der Transaktionen in Blöcke erfolgt zeitgetaktet.

Vor diesem Hintergrund besteht eine Aufgabe der vorliegenden Erfindung darin, ein verteiltes Datenbanksystem zu verbessern.

Gemäß einem ersten Aspekt wird eine Blockbildungs-Einrichtung für ein eine Anzahl Knoteneinrichtungen umfassendes verteiltes Datenbanksystem vorgeschlagen. Die Blockbildungs-Einrichtung weist auf: eine erste Einheit zum Auswählen einer Anzahl zu bestätigender Transaktionen aus einer in dem verteilten Datenbanksystem bereitgestellten Anzahl unbestätigter Transaktionen; eine zweite Einheit zum Bilden eines unbestätigten Blocks aus der ausgewählten Anzahl unbestätigter Transaktionen, wobei eine jeweilige ausgewählte unbestätigte Transaktion auf Gültigkeit geprüft und bei nicht bestanderer Prüfung verworfen, andernfalls in den unbestätigten Block aufgenommen wird, und zum Bereitstellen des unbestätigten Blocks in dem verteilten Datenbanksystem; und eine dritte Einheit zum Empfangen eines Zeittakts von einer Zeitquelle und zum Bestimmen von Zeitscheiben vorgegebener Länge anhand des Zeittakts. Die erste Einheit und die zweite Einheit sind dazu eingerichtet, das Auswählen, das Bilden und das Bereitstellen innerhalb einer jeweiligen Zeitscheibe genau einmal durchzuführen.

Das verteilte Datenbanksystem kann ein manipulationsgeschütztes Transaktionsbuch (engl. "ledger") implementieren, das durch eine in jeder der Knoteneinrichtungen gespeicherte Kette von bestätigten Blöcken repräsentiert wird. Die Kette kann mittels Verkettungsprüfsummen gebildet sein. Insbesondere kann das verteilte Datenbanksystem ein Blockketten-Netzwerk bzw. eine Blockchain sein.

Die vorgeschlagene Blockbildungs-Einrichtung kann eine Mining-Einrichtung sein. Die Blockbildungs-Einrichtung kann insbesondere eine Komponente einer Knoteneinrichtung des verteilten Datenbanksystems sein.

Die vorgeschlagene Blockbildungs-Einrichtung kann vorteilhafterweise den jeweiligen unbestätigten Block aus den jeweils in dem verteilten Datenbanksystem bereitgestellten unbestätigten Transaktionen in einem vorgegebenen Zeittakt bilden. Dadurch kann ein zeitgetaktetes Blockbilden oder Mining und somit ein zeitgetaktetes Bestätigen von unbestätigten Transaktionen ermöglicht werden. Somit kann die vorgeschlagene Blockbildungs-Einrichtung dem verteilten Datenbanksystem Eignung für die Verwendung zur Steuerung einer industriellen Automatisierungsanlage mit Echtzeitanforderungen verleihen.

Unter "einer Anzahl" ist eine Anzahl von eins oder mehr zu verstehen.

Die Einrichtungen des verteilten Datenbanksystems, darunter die Anzahl Knoteneinrichtungen und insbesondere die vorgeschlagene Blockbildungs-Einrichtung, können miteinander kommunikationsfähig bzw. vernetzt sein.

Unter "in dem verteilten Datenbanksystem Bereitstellen" einer unbestätigten Transaktion bzw. eines unbestätigten Blocks kann verstanden werden, dass die unbestätigte Transaktion bzw. der unbestätigte Block an mindestens eine der Einrichtungen des verteilten Datenbanksystems übermittelt wird. An die übrigen der Einrichtungen des verteilten Datenbanksystems kann die bereitzustellende unbestätigte Transaktion oder der bereitgestellte unbestätigte Block direkt, indirekt oder auf Peer-to-Peer-Weise übermittelt werden.

Das verteilte Datenbanksystem kann so eingerichtet sein, dass die für ein Bereitstellen bzw. Übermitteln eines unbestätigten Blocks bzw. einer unbestätigten Transaktion an eine Mehrheit oder alle Einrichtungen des verteilten Datenbanksystems benötigte Zeit kürzer ist als die Länge einer jeweiligen der Zeitscheiben.

Die erste Einheit kann dazu eingerichtet sein, die Anzahl zu bestätigender Transaktionen aus der bereitgestellten Anzahl unbestätigter Transaktionen in der Reihenfolge auszuwählen, in der die einzelnen unbestätigten Transaktionen bereitgestellt werden. Alternativ ist auch denkbar, dass bei dem Auswählen eine Priorisierung anhand von Eigenschaften der jeweiligen unbestätigten Transaktionen erfolgt.

Die zweite Einheit kann dazu eingerichtet sein, den unbestätigten Block aus der ausgewählten Anzahl unbestätigter Transaktionen in Übereinstimmung mit Anforderungen einer Konsensregel des verteilten Datenbanksystems zu bilden.

Insbesondere kann die zweite Einheit eingerichtet sein, die jeweilige ausgewählte unbestätigte Transaktion auf Gültigkeit gemäß der Konsensregel zu prüfen, bei nicht bestandener Prüfung die unbestätigte Transaktion zu verwerfen und andernfalls die unbestätigte Transaktion in den unbestätigten Block aufzunehmen. Im Rahmen der Prüfung können ein in der unbestätigten Transaktion enthaltener und/oder ein in einem Transaktionsbuch des verteilten Datenbanksystems hinterlegter und von der Transaktion referenzierter Smart Contract ausgeführt werden. Auf diese Weise kann Programmcode mit Steueranweisungen zur Ausführung gelangen, der in den Smart Contracts abgelegt ist.

Insbesondere kann die zweite Einheit dazu eingerichtet sein, den unbestätigten Block und/oder eine jeweilige der in den Block aufgenommenen unbestätigten Transaktionen mit einer Prüfsumme, wie etwa einem Hash-Wert oder einer Wurzel-Prüfsumme eines Hash-Baums, wie eines Merkle-Baums oder eines Patricia-Baums, gegen Manipulationen zu sichern.

Insbesondere kann die zweite Einheit eingerichtet sein, den unbestätigten Block mit dem Transaktionsbuch des verteilten Datenbanksystems zu verknüpfen. Hierzu kann sie zum Beispiel eine Verkettungsprüfsumme, wie eine Prüfsumme eines unmittelbar oder mittelbar vorangehenden Blocks der Kette von bestätigten Blöcken, in den unbestätigten Block aufnehmen. Eine solche Verkettung kann weiteren Manipulationsschutz bieten.

Hierbei kann der zweiten Einheit Zugriff auf eine lokale Kopie einer Repräsentation des Transaktionsbuchs des verteilten Datenbanksystems gewährt sein. Die lokale Kopie kann in einer Knoteneinrichtung des verteilten Datenbanksystems gespeichert sein - beispielsweise einer Knoteneinrichtung, deren Teil die Blockbildungs-Einrichtung ist, oder einer Knoteneinrichtung, mit der die Blockbildungs-Einrichtung kommunizieren kann.

Insbesondere kann die zweite Einheit einen Nachweiswert in den zu bildenden unbestätigten Block aufzunehmen. Der Nachweiswert kann als Nachweis eines berechtigten Interesses der Blockbildungs-Einheit an einem reibungslosen Betrieb des verteilten Datenbanksystems aufgefasst werden.

Denkbar ist etwa ein Proof-of-Stake-Nachweis, eine digitale Signatur, die eine besondere Berechtigung bzw. Vertrauensstellung der Blockbildungs-Einrichtung ausweist (sog. "permissioned ledger"), oder ein angepasster "Proof-of-Work", der mit Sicherheit innerhalb einer jeweiligen Zeitscheibe erbracht werden kann, wie beispielsweise eine "relative" Lösung eines kryptographischen Puzzles oder "Best-Effort-Proof-of-Work".

Insbesondere kann die zweite Einheit eine Coinbase-Transaktion in den zu bildenden unbestätigten Block aufnehmen, welche der Blockbildungs-Einrichtung oder einer der Blockbildungs-Einrichtung zugeordneten Knoteneinrichtung eine Vergütung für das Bilden des Blocks gewährt.

Indem die Konsensregel der verteilten Datenbank einerseits das Vorhandensein eines Nachweiswerts in einem zu bestätigenden Block vorschreibt und andererseits das Vorhandensein einer Coinbase-Transaktion erlaubt, wird einerseits das Bilden und somit das Manipulieren von Blöcken erschwert und andererseits ein Anreiz für das Bilden regelkonformer Blöcke geschaffen. Auf diese Weise kann vorteilhaft ein verteiltes Datenbanksystem ohne zentrale Clearing-Stelle mit ausgezeichneter Vertrauensstellung implementiert werden.

In Reaktion auf das Bereitstellen des solchermaßen gebildeten unbestätigten Blocks durch die zweite Einheit können die Knoteneinrichtungen des verteilten Datenbanksystems den bereitgestellten unbestätigten Block beispielsweise gemäß der Konsensregel des verteilten Datenbanksystems prüfen und den geprüften unbestätigten Block als neuesten bestätigten Block in das Transaktionsbuch des verteilten Datenbanksystems übernehmen. Auf diese Weise können die in dem unbestätigten Block enthaltenen unbestätigten Transaktionen bestätigt werden. Da der unbestätigte Block von der vorgeschlagenen Blockbildungs-Einrichtung zeitgetaktet bereitgestellt wird, können auf diese Weise die unbestätigten Transaktionen durch das verteilte Datenbanksystem, das die vorgeschlagene Blockbildungs-Einrichtung umfasst, vorteilhafterweise zeitgetaktet bestätigt und in das verteilte Datenbanksystem eingefügt werden.

Die Zeitquelle kann eine lokale Zeitquelle der Blockbildungs-Einrichtung und/oder einer Knoteneinrichtung, der die Blockbildungs-Einrichtung zugeordnet ist, wie etwa eine Chip Scale Atomic Clock, eine verteilte Zeitquelle des verteilten Datenbanksystems, wie etwa ein Zeitsynchronisationsprotokoll des verteilten Datenbanksystems wie NTP (Network Time Protocol) oder PTP (Precision Time Protocol), oder eine zu der Blockbildungs-Einrichtung und dem verteilten Datenbanksystem externe und davon entfernte Zeitquelle, wie etwa ein Zeitgeber eines Satellitennavigationssystems (GNSS, wie etwa GPS, Galileo, Beidou, Glonass), ein DCF77-Zeitsender oder ein MasterKnoten sein, der einen industriellen Zeittakt vorgibt (wie etwa IEEE Time Sensitive Networking, isochrones Profinet oder ein Zeitraster einer Programmabarbeitung einer speicherprogrammierbaren Steuerung). Bei einem von der Zeitquelle empfangenen Zeittakt kann es sich um einen absoluten oder einen relativen Zeittakt handeln. Unter einem Zeittakt kann eine Abfolge absoluter oder relativer Zeitangaben verstanden werden.

Der Zeittakt kann wiederholt bzw. zyklisch empfangen werden.

Einer Anzahl oder jeder der Einrichtungen des verteilten Datenbanksystems können der gleiche Zeittakt oder ein jeweils mit dem Zeittakt der Blockbildungs-Einrichtung synchroner Zeittakt bereitgestellt werden. Somit kann die vorgeschlagene Blockbildungs-Einrichtung zeitsynchronisiert mit weiteren Einrichtungen des verteilten Datenbanksystems gemäß einem Zeittakt des verteilten Datenbanksystems betrieben werden.

Der Zeittakt kann ein konstanter Zeittakt sein. Das heißt, die jeweiligen Zeitscheiben können gleich lang sein.

Die vorgegebene Länge einer Zeitscheibe kann durch den Zeittakt vorgegeben sein. Beispielsweise kann eine Zeitscheibe dem Zeitraum zwischen zwei Taktsignalen, oder übermittelten Zeitangaben, des Zeittakts entsprechen. Die vorgegebene Länge kann auch ein ganzzahliges Vielfaches des Zeitraums zwischen zwei Taktsignalen bzw. übermittelten Zeitangaben sein.

Die dritte Einheit kann dazu eingerichtet sein, den Betrieb der ersten Einheit und der zweiten Einheit anhand der bestimmten Zeitscheiben zu takten. Beispielsweise kann sie zu Beginn einer jeweiligen Zeitscheibe den Betrieb der ersten Einheit starten, nach Abschluss des Auswählens durch die erste Einheit den Betrieb der zweiten Einheit starten und zu einer vorbestimmten Zeit vor Ende der Zeitscheibe der zweiten Einheit ein Signal übermitteln, das diese auffordert, das Bilden des unbestätigten Blocks abzuschließen und den bis dahin bestmöglich gebildeten unbestätigten Block in dem verteilten Datenbanksystem bereitzustellen.

Auf diese Weise können die erste Einheit und die zweite Einheit dazu eingerichtet sein, das Auswählen, Bilden und Bereitstellen genau einmal innerhalb der jeweiligen Zeitscheibe durchzuführen.

Eine derartige Zeittaktung kann vorteilhafterweise die Verwendung des verteilten Datenbanksystems zur Speicherung von Mess- und Steuerwerten und zur Ausführung von als Smart Contracts implementiertem Programmcode mit Steueranweisungen zur Steuerung einer industriellen Automatisierungsanlage mit Echtzeitanforderungen ermöglichen.

Man beachte, dass der Begriff "genau einmal durchführen" auch so verstanden werden kann, dass das Auswählen, Bilden und Bereitstellen während der jeweiligen Zeitscheibe entweder nicht oder genau einmal durchgeführt wird. Anders ausgedrückt kann das Auswählen, Bilden und Bereitstellen während der jeweiligen Zeitscheibe abgeschlossen werden, sofern es begonnen wird. Es kann auch nicht begonnen werden, etwa wenn die Blockbildungs-Einrichtung für eine gegebene Zeitscheibe nicht aktiviert ist.

Gemäß einer Ausführungsform ist die erste Einheit dazu eingerichtet, während der jeweiligen Zeitscheibe alle in dem verteilten Datenbanksystem bereitgestellten unbestätigten Transaktionen, die einer vordefinierten Bedingung entsprechen, als zu bestätigende Transaktionen auszuwählen.

Somit kann die vorgeschlagene Blockbildungs-Einrichtung vorteilhafterweise gewährleisten, dass in einer jeweiligen Zeitscheibe alle bereitgestellten unbestätigten Transaktionen, die der vorbestimmten Bedingung entsprechen, von den Knoteneinrichtungen des verteilten Datenbanksystems bestätigt werden.

Die vorbestimmte Bedingung kann lauten, dass alle bereitgestellten unbestätigten Transaktionen aufzunehmen sind.

Die vorbestimmte Bedingung kann lauten, dass mindestens diejenigen der bereitgestellten unbestätigten Transaktionen aufzunehmen sind, die als zeitkritisch gekennzeichnet sind.

Die vorbestimmte Bedingung kann lauten, dass mindestens diejenigen der bereitgestellten unbestätigten Transaktionen aufzunehmen sind, bei denen es sich um Transaktionen mit Messwerten, Steuerwerten und/oder Smart Contracts mit Steuerbefehlen für ein industrielles Automatisierungssystem handelt.

Die vorbestimmte Bedingung kann lauten, dass mindestens diejenigen der bereitgestellten unbestätigten Transaktionen zu bestätigen sind, die für ihr Bestätigen eine vordefinierte Mindestvergütung an die Blockbildungs-Einrichtung gewähren.

Somit kann vorteilhafterweise gewährleistet werden, dass in einer jeweiligen Zeitscheibe alle bereitgestellten, alle zeitkritischen bzw. alle unbestätigten Transaktionen mit hoher Vergütung in den gebildeten Block aufgenommen werden.

Gemäß einer Ausführungsform weist die vorgeschlagene Blockbildungs-Einrichtung eine vierte Einheit zum Empfangen eines Aktivierungssignals auf. Die erste Einheit und die zweite Einheit sind dazu eingerichtet, das Auswählen, das Bilden und das Bereitstellen innerhalb der jeweiligen Zeitscheibe nur dann genau einmal durchzuführen, wenn die vierte Einheit das Aktivierungssignal in der jeweiligen Zeitscheibe empfängt.

Das Aktivierungssignal kann von einer Zeitplanungseinrichtung des verteilten Datenbanksystems übermittelt werden.

Demgemäß ist es möglich, in einem verteilten Datenbanksystem mehr als eine der vorgeschlagenen Blockbildungs-Einrichtungen zu nutzen. Auch wenn das Bilden von Blöcken bei den vorgeschlagenen Blockbildungs-Einrichtungen in einem vorgegebenen Zeittakt erfolgt, kann so eine unauflösbare Konkurrenzsituation vorteilhafterweise dadurch vermieden werden, dass die Zeitplanungseinrichtung in einer jeweiligen Zeitscheibe jeweils nur eine der Blockbildungs-Einrichtungen mit dem Aktivierungssignal aktiviert. Hierbei kann die Verwendung mehrerer Blockbildungs-Einrichtungen im Wechsel vorteilhaft im Hinblick auf ein Vertrauensgleichgewicht bei einem Mehrheitskonsens in dem verteilten Datenbanksystem sein. So kann etwa eine für erfolgreiches Bilden eines Blocks ausgelobte Vergütung im Wechsel unterschiedlichen Blockbildungs-Einrichtungen gewährt werden und somit ein Gleichgewicht von Kryptotoken-Guthaben in dem verteilten Datenbanksystem gewahrt bleiben. Dies kann vorteilhaft sein, wenn die Verteilung von Kryptotoken zwischen den Knoteneinrichtungen bedeutsam für die Manipulationssicherheit des Netzwerks ist, etwa im Falle des Bildes von Blöcken unter Verwendung eines Proof-of-Stake als Nachweiswert.

Gemäß einer weiteren Ausführungsform ist die zweite Einheit dazu eingerichtet, in den gebildeten Block einen besten von ihr innerhalb der jeweiligen Zeitscheibe ermittelbaren kryptographischen Arbeitsnachweis aufzunehmen.

Anders ausgedrückt wird ein modifizierter Proof-of-Work (Arbeitsnachweis) auf Best-Effort-Basis vorgeschlagen. Etwa kann ein kryptographisches Puzzle nicht vollständig, sondern nur auf bestmögliche Weise gelöst werden. Beispielsweise kann die zweite Einheit in den gebildeten Block einen wahlfreien Wert oder Nonce aufnehmen und den Nonce derart ermitteln, dass eine Prüfsumme des gesamten gebildeten Blocks einschließlich des Nonce möglichst extremal, wie beispielsweise möglichst gering, ist. Handelt es sich um eine kryptographische Prüfsumme, wie einen Hash-Wert, kann ein solches Ermitteln nur durch Ausprobieren möglich sein. Mit dem Ausprobieren kann begonnen werden, sobald der zu bildende Block mit Ausnahme des zu ermittelnden Nonce gebildet ist, und das Ausprobieren kann zu einem vorgegebenen Zeitpunkt innerhalb der jeweiligen Zeitscheibe beendet werden. Auf diese Weise kann ein innerhalb der zur Verfügung stehenden Zeit bestmöglicher Arbeitsnachweis mit Sicherheit innerhalb der jeweiligen Zeitscheibe erbracht werden.

Demgemäß ist es vorteilhafterweise möglich, in einem verteilten Datenbanksystem mehr als eine der vorgeschlagenen Blockbildungs-Einrichtungen gleichzeitig zu nutzen. Auch wenn das Bilden von Blöcken bei den vorgeschlagenen Blockbildungs-Einrichtungen in einem vorgegebenen Zeittakt erfolgt, kann eine daraus resultierende Konkurrenzsituation vorteilhafterweise dadurch aufgelöst werden, dass beispielsweise die Konsensregel des verteilten Datenbanksystems vorsieht, dass die Knoteneinrichtungen des verteilten Datenbanksystems denjenigen von einer Anzahl unbestätigten Blöcken bestätigen, welcher den besten Arbeitsnachweis enthält.

Somit können die Vorteile von Mining (Bilden von Blöcken mittels Proof-of-Work) auch dann erzielt werden, wenn das Bilden der Blöcke gemäß der vorgeschlagenen Blockbildungs-Einrichtungen zeitgetaktet erfolgt.

Gemäß einer weiteren Ausführungsform ist die zweite Einheit dazu eingerichtet, in den gebildeten Block einen Zeitstempel aufzunehmen, der die jeweilige Zeitscheibe identifiziert.

Dementsprechend kann die Konsensregel des verteilten Datenbanksystems vorsehen, dass nur solche unbestätigten Blöcke bestätigt werden, die einen zu einer beim Bestätigen aktuellen Zeitscheibe passenden Zeitstempel enthalten. Auf diese Weise können verspätete Blöcke oder verfrühte (ggf. manipulierte) Blöcke vorteilhafterweise verworfen werden.

Gemäß einem zweiten Aspekt wird eine Knoteneinrichtung für ein eine Anzahl Knoteneinrichtungen umfassendes verteiltes Datenbanksystem vorgeschlagen. Die Knoteneinrichtung weist auf: eine fünfte Einheit zum Speichern einer Kette von bestätigten Blöcken, welche mindestens einen Abschnitt eines Transaktionsbuchs des verteilten Datenbanksystems repräsentieren; eine sechste Einheit zum Bestätigen genau eines aus einer Anzahl in dem verteilten Datenbanksystem in der jeweiligen Zeitscheibe bereitgestellter unbestätigter Blöcke, so dass der bestätigte Block an die Kette von bestätigten Blöcken angefügt ist, wobei das Bestätigen des genau einen aus der Anzahl unbestätigter Blöcke ein Prüfen eines, mehrerer oder aller der unbestätigten Blöcke, ein Auswählen eines von erfolgreich geprüften der unbestätigten Blöcke und ein Anfügen des ausgewählten Blocks als der bestätigte Block an die Kette von bestätigten Blöcken umfasst; und eine dritte Einheit zum Empfangen eines Zeittakts von einer Zeitquelle und Bestimmen von Zeitscheiben vorgegebener Länge anhand des Zeittakts. Die sechste Einheit ist dazu eingerichtet, das Bestätigen innerhalb einer jeweiligen Zeitscheibe genau einmal durchzuführen.

Die bei der Beschreibung der vorgeschlagenen Blockbildungs-Einrichtung beschriebenen Merkmale, Definitionen und Vorteile gelten, sofern zutreffend, entsprechend für die vorgeschlagene Knoteneinrichtung.

Man kann sagen, dass die vorgeschlagene Knoteneinrichtung ein komplementäres Gegenstück zu der vorgeschlagenen Blockbildungs-Einrichtung bildet.

Die vorgeschlagene Knoteneinrichtung kann vorteilhafterweise in einem vorgegebenen Zeittakt unbestätigte Blöcke bestätigen. Beispielsweise kann die vorgeschlagene Knoteneinrichtung die von der vorgeschlagenen Blockbildungs-Einrichtung zeitgetaktet gebildeten unbestätigten Blöcke mit demselben Zeittakt bestätigen. Dadurch kann ein zeitgetaktetes Bestätigen von unbestätigten Transaktionen ermöglicht werden. Somit kann die vorgeschlagene Knoteneinrichtung dem verteilten Datenbanksystem, das die vorgeschlagene Knoteneinrichtung umfasst, Eignung für die Verwendung zur Steuerung einer industriellen Automatisierungsanlage mit Echtzeitanforderungen verleihen.

Die in der fünften Einheit gespeicherte Kette von bestätigten Blöcken kann als lokale Kopie einer Version des Transaktionsbuchs aufgefasst werden, über die Konsens zwischen der Anzahl von Knoteneinrichtungen herrscht bzw. sich mit der Zeit herausbildet. Der Konsens kann hierbei dadurch erreicht werden, dass die sechste Einheit beim Auswählen und Bestätigen des genau einen zu bestätigenden Blocks gemäß einer festgelegten Konsensregel des verteilten Datenbanksystems verfährt. Ebenso kann eine Blockbildungs-Einrichtung, wie die vorgeschlagene Blockbildungs-Einrichtung, des verteilten Datenbanksystems beim Bilden von unbestätigten Blöcken vorzugsweise nach derselben festgelegten Konsensregel verfahren. Die Konsensregel kann derart eingerichtet sein, dass regelkonformes Verhalten einer Knoteneinrichtung belohnt wird und nicht regelkonformes Verhalten nicht lohnend ist bzw. der sich nicht regelkonform verhaltenden Knoteneinrichtung im Laufe der Zeit eine weitere Teilnahme an der Konsensfindung automatisch verwehrt ist. Derart kann gewährleistet werden, dass sich ein Konsens dergestalt ausbildet, dass in einer Mehrheit und vorzugsweise in allen der Knoteneinrichtungen des verteilten Datenbanksystems identische Repräsentationen des Transaktionsbuchs gespeichert sind und unautorisierte Manipulationen erschwert oder verhindert werden.

Die sechste Einheit kann dazu eingerichtet sein, eine Anzahl der während der jeweiligen Zeitscheibe in dem verteilten Datenbanksystems bereitgestellten unbestätigten Blöcke gemäß der Konsensregel zu prüfen, unbestätigte Blöcke, die der Konsensregel nicht genügen, zu verwerfen, und unter den verbleibenden unbestätigten Blöcken gemäß der Konsensregel einen zu bestätigten Block auszuwählen und den ausgewählten Block an die Kette von bestätigten Blöcken anzufügen und dadurch zu bestätigen.

Somit kann unter "Bestätigen eines aus einer Anzahl von unbestätigten Blöcken" ein Prüfen eines, mehrerer oder aller der unbestätigten Blöcke, Auswählen eines der erfolgreich geprüften unbestätigten Blöcke und Anfügen des ausgewählten Blocks an die Kette von bestätigten Blöcken verstanden werden.

Unter "Anfügen" kann sowohl ein Anfügen an einen letzten bestätigten Block der Kette von bestätigten Blöcken als auch ein Erstellen einer Kopie bzw. eines Forks der Kette von bestätigten Blöcken durch Anfügen an einer anderen Position, d. h. an einen früheren als den letzten der bestätigten Blöcke der Kette von bestätigten Blöcken verstanden werden. Insbesondere kann der anzufügende Block gemäß der Konsensregel an denjenigen aus der Kette von bestätigten Blöcken angefügt werden, dessen Prüfsumme einer in dem anzufügenden Block enthaltenen Verkettungsprüfsumme entspricht.

Die Konsensregel kann vorgeben, welche der Kopien oder Forks der Kette von bestätigten Blöcken hierbei als gültige Repräsentation des Transaktionsbuchs der verteilten Datenbank betrachtet wird. Beispielsweise kann die längste der Ketten als die gültige Repräsentation betrachtet werden.

Eine in dem verteilten Datenbanksystem bereitgestellte unbestätigte Transaktion kann von der vorgeschlagenen Blockbildungs-Einrichtung in einen unbestätigten Block aufgenommen werden, der in dem verteilten Datenbanksystem bereitgestellt wird. Der in dem verteilten Datenbanksystem bereitgestellte unbestätigte Block kann von einer jeweiligen der Knoteneinrichtungen, wie vorstehend beschrieben, geprüft und durch Anfügen an das Transaktionsbuch (die jeweilige lokale Kopie des Transaktionsbuchs) der verteilten Datenbank bestätigt werden. Dadurch können die in dem jeweiligen Block enthaltenen Transaktionen bestätigt werden. Gemäß der vorgeschlagenen Lösung kann sowohl das Bilden des unbestätigten Blocks als auch das Bestätigen des unbestätigten Blocks und somit das Bestätigen der unbestätigten Transaktion gemäß einem vorgegebenen, vorzugsweise zyklischen Zeittakt zeitsynchronisiert erfolgen.

Insbesondere kann die sechste Einheit dazu eingerichtet sein, in der jeweiligen Zeitscheibe zu warten, bis das Bilden und Bereitstellen von Blöcken durch eine oder mehrere Blockbildungs-Einrichtungen des verteilten Datenbanksystems abgeschlossen ist, und daraufhin einen der gebildeten und bereitgestellten unbestätigten Blöcke auszuwählen und zu bestätigen.

Bei der vorgeschlagenen Zeittaktung kann eine jeweilige Zeitscheibe unterteilt sein in einen Zeitabschnitt zum Bereitstellen von unbestätigten Transaktionen, einen Abschnitt zum Bilden von unbestätigten Blöcken, einen Abschnitt zum Bereitstellen der unbestätigten Blöcke und einen Abschnitt zum Bestätigen der bereitgestellten unbestätigten Blöcke. Alternativ hierzu können alternierend jeweils in einer Zeitscheibe Blöcke gebildet und bereitgestellt und in einer darauffolgenden Zeitscheibe Blöcke ausgewählt und bestätigt werden.

Gemäß einer weiteren Ausführungsform ist die sechste Einheit dazu eingerichtet, den genau einen Block zum Bestätigen anhand mindestens eines Kriteriums auszuwählen.

Sind in dem Netzwerk mehrere Blockbildungs-Einrichtungen vorgesehen, ist es denkbar, dass während einer jeweiligen Zeitscheibe mehr als ein unbestätigter Block bereitgestellt wird. In einer solchen Konkurrenzsituation kann die Konsensregel ein oder mehrere Kriterien vorgegeben, nach welchen der bereitgestellten unbestätigten Blöcke zu bestätigen ist.

In einer Variante lautet das Kriterium "Anzahl und Art von in dem Block umfassten Transaktionen".

Beispielsweise kann derjenige der mehreren unbestätigten Blöcke mit den meisten unbestätigten Transaktionen ausgewählt werden. Somit kann vorteilhaft für einen hohen Transaktionsdurchsatz des verteilten Datenbanksystems gesorgt werden.

Beispielsweise kann derjenige der mehreren unbestätigten Blöcke mit den meisten Transaktionen einer bestimmten Art ausgewählt werden. Somit können vorteilhaft bestimmte Transaktionen, wie etwa zeitkritische Transaktionen, priorisiert werden.

In einer Variante lautet das Kriterium "Güte eines von dem Block umfassten kryptographischen Arbeitsnachweises".

Beispielsweise kann ein Block der mehreren unbestätigten Blöcke bevorzugt werden, der ein kryptographisches Puzzle mit höherer Güte löst, beispielsweise derjenige Block mit dem kleinsten Nonce-Wert als Arbeitsnachweis. Eine Güte eines kryptographischen Arbeitsnachweises kann im Wesentlichen nicht vorhersagbar bzw. zufällig sein. Somit kann vorteilhafterweise sichergestellt werden, dass in unterschiedlichen Zeitscheiben Blöcke bevorzugt werden, die von unterschiedlichen Knoteneinrichtungen bzw. Blockbildungs-Einrichtungen herrühren. Sofern mit dem Bestätigen eines Blocks eine Vergütung für die Knoteneinrichtung vorgesehen ist, die den Block gebildet hat, kann auf diese Weise ein Gleichgewicht von Kryptotoken-Guthaben in dem verteilten Datenbanksystem sichergestellt werden.

In einer Variante lautet das Kriterium "Güte und/oder rechnerische Komplexität einer jeweiligen von dem Block umfassten Transaktion".

Die rechnerische Komplexität einer jeweiligen Transaktion kann sich insbesondere auf die Rechenlast beziehen, die die Blockbildungs-Einrichtung, welche den Block gebildet hat, aufgebracht hat, um die Transaktion auf Gültigkeit zu prüfen. Sofern eine Transaktion einen Smart Contract enthält oder referenziert, kann diese Rechenlast erheblich sein. Infolgedessen kann einer Blockbildungs-Einrichtung, die eine solche Transaktion prüft, weniger Rechenkapazität zum Ermitteln eines möglichst guten Arbeitsnachweises innerhalb der jeweiligen Zeitscheibe verbleiben. Somit wäre es, wenn ausschließlich das Kriterium "Güte eines Arbeitsnachweises" angewandt wird, wenig wahrscheinlich, dass der betreffende Block von den Knoteneinrichtungen zum Bestätigen ausgewählt wird. Wird jedoch außerdem auch das Kriterium "Güte einer jeweiligen Transaktion" angewendet, kann dieser Effekt kompensiert und vorteilhaft verhindert werden, dass unbestätigte Blöcke mit komplexen Transaktionen bei der Auswahl zum Bestätigen benachteiligt sind.

Weitere Beispiele für eine Transaktionsgüte sind etwa eine Menge bzw. ein Betrag an Kryptotoken (je höher der Betrag, desto höher die Güte der Transaktion), eine Art der Transaktion (je zeitkritischer die Transaktion, desto höher ihre Güte), eine in der Transaktion enthaltene Datenmenge usw.

In einer Variante lautet das Kriterium "Übereinstimmung eines von dem Block umfassten Zeitstempels mit der jeweiligen Zeitscheibe".

Durch dieses Kriterium kann vorteilhafterweise eine Korrespondenz zwischen einer Abfolge der bestätigten Transaktionen in dem Transaktionsbuch des verteilten Datenbanksystems und der Abfolge des Bereitstellens der unbestätigten Transaktionen hergestellt werden. Das heißt, es kann vermieden werden, dass ein zeitlich verzögerter Block verspätet aufgenommen wird, oder dass ein Block mit einem zukünftigen Zeitstempel, wie etwa ein manipulierter Block, verfrüht bestätigt wird. Die Zuverlässigkeit und Echtzeitfähigkeit des verteilten Datenbanksystems kann somit verbessert werden.

Es sei angemerkt, dass unter "Übereinstimmung" neben dem Fall, dass der von dem Block umfasste Zeitstempel die jeweilige Zeitscheibe bezeichnet, auch der Fall verstanden werden kann, dass der von dem Block umfasste Zeitstempel eine der jeweiligen Zeitscheibe unmittelbar oder mittelbar vorangehende Zeitscheibe bezeichnet.

In einer Variante lautet das Kriterium "ob eine Blockbildungs-Einrichtung, welche den Block bereitgestellt hat, eine Blockbildungs-Einrichtung ist, für die ein während der jeweiligen Zeitscheibe in dem verteilten Datenbanksystem übertragenes Aktivierungssignal bestimmt ist".

Gemäß diesem Kriterium kann vorteilhaft vermieden werden, dass nicht explizit aktivierte (und daher möglicherweise böswillig agierende) Blockbildungs-Einrichtungen Blöcke in das verteilte Datenbanksystem einschleusen.

Gemäß einer weiteren Ausführungsform ist die sechste Einheit dazu eingerichtet, den genau einen Block zum Bestätigen anhand eines Kriteriums auszuwählen, ob der Block alle während der jeweiligen Zeitscheibe in dem verteilten Datenbanksystem bereitgestellten unbestätigten Transaktionen umfasst, die einer vordefinierten Bedingung entsprechen.

Das vorstehend bei Ausführungsformen der Blockbildungs-Einrichtung in Bezug auf die "vordefinierte Bedingung" Beschriebene gilt entsprechend.

Ist ein solches Kriterium Teil der Konsensregel des verteilten Datenbanksystems, hat jede Blockbildungs-Einrichtung des verteilten Datenbanksystems ein Interesse daran, alle in einer jeweiligen Zeitscheibe in dem verteilten Datenbanksystem bereitgestellten unbestätigten Transaktionen, die der vordefinierten Bedingung entsprechen, in den von ihr gebildeten unbestätigten Block aufzunehmen, da dieser andernfalls nicht bestätigt würde und die Blockbildungs-Einrichtung entsprechend keine Vergütung erhielte.

Somit kann mit dem vorliegenden Kriterium vorteilhafterweise gewährleistet werden, dass in jeder Zeitscheibe alle in der betreffenden Zeitscheibe bereitgestellten unbestätigten Transaktionen, die der vordefinierten Bedingung entsprechen, während derselben Zeitscheibe von einer Blockbildungs-Einrichtung des verteilten Datenbanksystems in einen unbestätigten Block aufgenommen und während derselben bzw. der darauffolgenden Zeitscheibe durch Bestätigen des unbestätigten Blocks durch die Knoteneinrichtungen des verteilten Datenbanksystems bestätigt werden.

Die Kriterien zum Auswählen des Blocks zum Bestätigen gemäß den vorstehenden Varianten und Ausführungsformen sind beliebig kombinierbar.

Gemäß einer weiteren Ausführungsform weist die vorgeschlagene Knoteneinrichtung die vorgeschlagene Blockbildungs-Einrichtung auf.

Anders ausgedrückt kann sowohl die durch die vorgeschlagene Blockbildungs-Einrichtung realisierte zeitgetaktete Blockbildungs-Funktionalität als auch die durch die vorstehend beschriebene vorgeschlagene Knoteneinrichtung realisierte zeitgetaktete Bestätigungs-Funktionalität in einer vorgeschlagenen Knoteneinrichtung vereint sein. Es versteht sich, dass hierbei für die Knoteneinrichtung, die die Blockbildungs-Einrichtung umfasst, die dritte Einheit der Knoteneinrichtung und die dritte Einheit der integrierten Blockbildungs-Einrichtung identisch sein können. Mit anderen Worten kann nur eine dritte Einheit vorgesehen sein.

Vorzugsweise kann somit eine, besonders bevorzugt jede, der Knoteneinrichtungen eines verteilten Datenbanksystems sowohl zeitgetaktet unbestätigte Blöcke bilden als auch von anderen Knoteneinrichtungen zeitgetaktet bereitgestellte unbestätigte Blöcke zeitgetaktet bestätigen.

Gemäß einer weiteren Ausführungsform wird ein verteiltes Datenbanksystem vorgeschlagen, das eine Anzahl der vorgeschlagenen Knoteneinrichtungen umfasst. Die vorgeschlagenen Knoteneinrichtungen sind dazu eingerichtet, gemeinsam das Transaktionsbuch des verteilten Datenbanksystems zu verwalten. Mindestens eine der Knoteneinrichtungen umfasst eine vorgeschlagene Blockbildungs-Einrichtung. Die Knoteneinrichtungen sind gemäß einem Zeittakt des verteilten Datenbanksystems zeitsynchronisiert betreibbar.

Dadurch, dass die Knoteneinrichtungen des vorgeschlagenen verteilten Datenbanksystems zeitsynchronsiert betreibbar sind, kann besonders zuverlässig gewährleistet werden, dass unbestätigte Transaktionen innerhalb einer von dem Zeittakt abgeleiteten Zeitscheibe bestätigt werden können.

Die Anzahl Knoteneinrichtungen kann dadurch zeitsynchronisiert betreibbar sein, dass die von der jeweiligen Knoteneinrichtung zu empfangenden Zeittakte und der Zeittakt des verteilten Datenbanksystems synchron sind. Alternativ hierzu kann eine jeweilige Knoteneinrichtung dazu eingerichtet sein, denselben Zeittakt des verteilten Datenbanksystems zu empfangen.

Somit sind insbesondere der oder die von der jeweiligen Knoteneinrichtung zu empfangenden Zeittakte und der Zeittakt des verteilten Datenbanksystems zeitsynchronisiert.

Unter zeitsynchronem Betrieb der Knoteneinrichtungen des verteilten Datenbanksystems kann insbesondere Folgendes verstanden werden:
Eine Taktung bzw. die jeweiligen Zeitscheiben einer zeitgetakteten Blockbildungs-Funktionalität (der ersten bis dritten Einheit) und einer zeitgetakteten Bestätigungs-Funktionalität (der fünften, sechsten und dritten Einheit) der Knoteneinrichtungen des verteilten Datenbanksystems ist vorzugsweise synchronisiert. Darunter kann verstanden werden, dass die gleiche Taktung verwendet wird bzw. die jeweiligen Zeitscheiben zusammenfallen, oder dass die Taktung der zeitgetakteten Blockbildungs-Funktionalität und die Taktung der zeitgetakteten Bestätigungs-Funktionalität bzw. die jeweiligen Zeitscheiben um einen festen Zeitversatz verschoben sind. Es ist jedoch auch möglich, dass die Taktung der zeitgetakteten Blockbildungs-Funktionalität unabhängig getaktet von der Taktung der zeitgetakteten Bestätigungs-Funktionalität erfolgt. Es sind weitere Varianten der Taktung denkbar. Beispielsweise kann der Zeittakt der zeitgetakteten Bestätigungs-Funktionalität durch Teilen des Zeittakts der zeitgetakteten Blockbildungs-Funktionalität gebildet werden. Beispielsweise kann ein jeweiliger Block durch die zeitgetaktete Bestätigungs-Funktionalität jeweils nach einer Mehrzahl, beispielsweise zwei oder vier, Zeittakten der zeitgetakteten Blockbildungs-Funktionalität gebildet werden. Weiterhin ist es denkbar, dass der Zeittakt nicht fest ist, sondern adaptiv angepasst wird, abhängig von der Zahl und/oder Art der bereitgestellten unbestätigten Transaktionen.

Insbesondere kann mehr als eine der Knoteneinrichtungen eine jeweilige Blockbildungs-Einrichtung wie vorgeschlagen umfassen. Das verteilte Datenbanksystem kann eine Zeitplanungseinrichtung aufweisen, die dazu eingerichtet ist, in der jeweiligen Zeitscheibe ein Aktivierungssignal an jeweils eine der Blockbildungs-Einrichtungen zu übermitteln.

Hierbei kann die Zeitplanungseinrichtung dazu eingerichtet sein, gemäß einer vorgegebenen Abfolge, zufällig, oder anhand von Eigenschaften einer jeweiligen Knoteneinrichtung, wie etwa einer Menge an von der jeweiligen Knoteneinrichtung gehaltenen Kryptotokens, zu entscheiden, an welche der Knoteneinrichtungen (Blockbildungs-Einrichtungen) in der jeweiligen Zeitscheibe das Aktivierungssignal übermittelt wird.

Gemäß einer weiteren Ausführungsform umfasst das verteilte Datenbanksystem eine zentrale Zeitquelle, wobei die Zeitquelle, von welcher die dritte Einheit der jeweiligen Knoteneinrichtung den Zeittakt empfängt, die zentrale Zeitquelle ist.

Die zentrale Zeitquelle kann ein DCF77-Zeitsender, ein GNSS-Zeitgeber, ein NTP-/PTP-Server oder ein Masterknoten, der einen industriellen Zeittakt vorgibt, oder dergleichen sein.

Durch Verwendung einer zentralen Zeitquelle kann die Struktur einer jeweiligen Knoteneinrichtung vereinfacht werden, da der Zeittakt lediglich empfangen zu werden braucht und kein lokaler Zeitgeber bei den Knoteneinrichtungen erforderlich ist.

Gemäß einer weiteren Ausführungsform wird ein industrielles Automatisierungssystem vorgeschlagen, welches das vorgeschlagene verteilte Datenbanksystem und eine Anzahl gemäß einem Zeittakt betreibbare Automatisierungskomponenten umfasst. Das verteilte Datenbanksystem ist zum Regeln und/oder Steuern der Anzahl Automatisierungskomponenten betreibbar. Der Zeittakt des verteilten Datenbanksystems ist synchron mit dem Zeittakt der Anzahl Automatisierungskomponenten oder einem ganzzahligen Vielfachen des Zeittakts der Anzahl Automatisierungskomponenten.

Beispiele für Automatisierungskomponenten sind Sensoren, die dazu eingerichtet sind, einen physikalischen Zustand in einer industriellen Anlage zu messen, Aktoren, die dazu eingerichtet sind, einen physikalischen Zustand in einer industriellen Anlage zu beeinflussen, Steuereinheiten, die eine Steuerlogik zum Bestimmen von Steuerwerten für die Aktoren basierend auf Messwerten der Sensoren implementieren, und dergleichen.

Das verteilte Datenbanksystem kann beispielsweise dadurch zum Steuern der Anzahl Automatisierungskomponenten betreibbar sein, dass Abschnitte der Steuerlogik des Automatisierungssystems in Form von in dem Transaktionsbuch des verteilten Datenbanksystems bestätigten Smart Contracts abgelegt sind. Ebenso können von der Anzahl Automatisierungskomponenten gelieferte Messwerte und/oder an die Anzahl Automatisierungskomponenten zu übermittelnde Steuerwerte in Form von Transaktionen in dem Transaktionsbuch des verteilten Datenbanksystems bestätigt werden. Hierdurch lassen sich vorteilhafterweise Transparenz, Manipulationsschutz und Nachvollziehbarkeit eines Betriebs des Automatisierungssystems erzielen. Durch den zeitgetakteten Betrieb des vorgeschlagenen Datenbanksystems, welcher insbesondere ein zeitgetaktetes Bestätigten unbestätigter Transaktionen und damit ein zeitgetaktetes Ausführen von Smart Contracts ermöglichen kann, können diese und weitere Vorteile des Blockketten-basierten verteilten Datenbanksystems auch dann erzielt werden, wenn hohe Echtzeitanforderungen an die Steuerlogik des Automatisierungssystems gestellt werden. Insbesondere können durch die Synchronisierung des Zeittakts des verteilten Datenbanksystems mit dem Zeittakt des Automatisierungssystems einzelne Steuerschritte des Automatisierungssystems durch das verteilte Datenbanksystem nachvollziehbar durchgeführt und manipulationsgeschützt dokumentiert werden.

In einer Variante des vorgeschlagenen industriellen Automatisierungssystems und/oder des vorgeschlagenen verteilten Datenbanksystems ist denkbar, dass das verteilte Datenbanksystem mehrere Transaktionsbücher speichert, wobei jedes Transaktionsbuch durch eine Kette von bestätigten Blöcken repräsentiert wird, wobei eine Kette aus der Anzahl von Ketten ein Haupttransaktionsbuch und die übrigen der Anzahl von Ketten jeweilige Seitentransaktionsbücher des verteilten Datenbanksystems repräsentieren.

Die Ketten, die die Seitentransaktionsbücher repräsentierten ("Seiten-Ketten"), können mit Zeitscheiben betrieben werden, die um einen ganzzahligen Faktor kürzer sind als die Zeitscheiben, mit denen die Kette betrieben wird, die das Haupttransaktionsbuch repräsentiert ("Haupt-Kette").

Die Haupt-Kette und die Seiten-Ketten können gemäß unterschiedlichen Konsensregeln betrieben werden. So kann in einer Seiten-Kette ein niedrigeres kryptographisches Schutzniveau implementiert sein, jedoch kann der Betrieb der Seiten-Kette mit geringerem Ressourcenaufwand realisiert werden. Demgegenüber kann in einer Haupt-Kette ein hohes kryptographisches Schutzniveau implementiert sein.

Unter "Betreiben einer Kette" kann hierbei das Betreiben derjenigen der Knoteneinrichtungen verstanden werden, die in ihrer fünften Einheit die jeweilige Kette speichern.

Auf diese Weise kann vorteilhaft eine Lastverteilung über die Ketten realisiert werden, wobei Transaktionen von geringerer Bedeutung in den Seitenketten und Transaktionen von höherer Bedeutung in der Hauptkette bestätigt werden.

Ein jeweiliges Seitentransaktionsbuch kann über in dem Haupttransaktionsbuch abgelegte Hash-Werte oder dergleichen von ausgewählten Blöcken des Seitentransaktionsbuchs in regelmäßigen Blockabständen mit dem Haupttransaktionsbuch verknüpft sein. Dadurch kann ein von der Hauptkette gebotenes hohes Schutzniveau mindestens teilweise auch auf die Seitenketten ausgedehnt werden.

Die jeweilige Einheit, zum Beispiel eine jeweilige der ersten bis sechsten Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem dritten Aspekt wird ein Blockbildungs-Verfahren für ein eine Anzahl Knoteneinrichtungen umfassendes verteiltes Datenbanksystem vorgeschlagen. Das Blockbildungs-Verfahren umfasst: Auswählen einer Anzahl zu bestätigender Transaktionen aus einer in dem verteilten Datenbanksystem bereitgestellten Anzahl unbestätigter Transaktionen; Bilden eines unbestätigten Blocks aus der ausgewählten Anzahl unbestätigter Transaktionen, wobei eine jeweilige ausgewählte unbestätigte Transaktion auf Gültigkeit geprüft und bei nicht bestanderer Prüfung verworfen, andernfalls in den unbestätigten Block aufgenommen wird, und Bereitstellen des unbestätigten Blocks in dem verteilten Datenbanksystem; und Empfangen eines Zeittakts von einer Zeitquelle und Bestimmen von Zeitscheiben vorgegebener Länge anhand des Zeittakts. Das Auswählen, das Bilden und das Bereitstellen erfolgen hierbei innerhalb einer jeweiligen Zeitscheibe genau einmal.

Die für die vorgeschlagene Blockbildungs-Einrichtung gemäß dem ersten Aspekt beschriebenen Ausführungsformen und Merkmale gelten für das vorgeschlagene Blockbildungs-Verfahren gemäß dem dritten Aspekt entsprechend.

Gemäß einem vierten Aspekt wird ein Blockbestätigungs-Verfahren für ein eine Anzahl Knoteneinrichtungen umfassendes verteiltes Datenbanksystem vorgeschlagen. Das Blockbestätigungs-Verfahren umfasst: Speichern einer Kette von bestätigten Blöcken, welche ein Hauptbuch einer verteilten Datenbank repräsentieren; Bestätigen genau eines aus einer Anzahl in dem verteilten Datenbanksystem in der jeweiligen Zeitscheibe bereitgestellter unbestätigter Blöcke, wobei der bestätigte Block an die Kette von bestätigten Blöcken angefügt wird, wobei das Bestätigen des genau einen aus der Anzahl unbestätigter Blöcke ein Prüfen eines, mehrerer oder aller der unbestätigten Blöcke, ein Auswählen eines von erfolgreich geprüften der unbestätigten Blöcke und ein Anfügen des ausgewählten Blocks als der bestätigte Block an die Kette von bestätigten Blöcken umfasst; und Empfangen eines Zeittakts von einer Zeitquelle und Bestimmen von Zeitscheiben vorgegebener Länge anhand des Zeittakts. Das Bestätigen erfolgt hierbei innerhalb einer jeweiligen Zeitscheibe genau einmal.

Die für die vorgeschlagene Knoteneinrichtung gemäß dem zweiten Aspekt beschriebenen Ausführungsformen und Merkmale gelten für das vorgeschlagene Blockbestätigungs-Verfahren gemäß dem vierten Aspekt entsprechend.

Weiterhin wird ein Computerprogrammprodukt vorgeschlagen, welches auf einer programmgesteuerten Einrichtung die Durchführung eines der wie oben erläuterten Verfahren veranlasst.

Ein Computerprogrammprodukt, wie z. B. ein Computerprogramm-Mittel, kann beispielsweise als Speichermedium, wie z. B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Nähere Einzelheiten und weitere Varianten von auf Blockketten-Technologie basierenden verteilten Datenbanksystemen, auf die die vorgeschlagene Blockbildungs-Einrichtung, die vorgeschlagene Knoteneinrichtung und die vorgeschlagenen Verfahren anwendbar sind, werden im Folgenden erläutert.

Sofern es in der nachstehenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module oder anderer Aspekte und/oder Teilaspekte der Erfindung realisiert.

Unter einer "Speichereinheit", einem "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hash-Wert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hash-Wert/e eines Hash-Baumes (z. B. Merkle-Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transaktionen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle-Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hash-Baumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann zum Beispiel ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten, Messwerte, Steuerwerte, oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transaktion einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktion abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Anders gesagt kann insbesondere unter "sicherheitsgeschützt" im Zusammenhang mit der Erfindung auch "kryptographisch geschützt" und/oder "manipulationsgeschützt" verstanden werden. Dabei kann "manipulationsgeschützt" auch als "integritätsgeschützt" bezeichnet werden.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, ein Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Blockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktion und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.).

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird zum Beispiel eine virtuelle Maschine durch die Infrastruktur des verteilten Datenbanksystems realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Proof-of-Work" oder "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer-Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensregeln bzw. Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass (alle) Kanten (immer) die gleiche Richtung haben, ähnlich wie dies z. B. bei Zeit ist. Mit anderen Worten ist es insbesondere nicht möglich, rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben. Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer-to-Peer-Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work-Nachweis und eine Nonce (Einmalwert, Zufallswert oder Zähler, der für den Proof-of-Work-Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mitgespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehende Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems", "Knoteneinrichtung" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder Ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen implementiert ist (z. B. Tamper-Schutz oder ein Schutzsystem, das die Daten des Sicherheitsmoduls bei einer unzulässigen Nutzung/Behandlung des Blockketten-Orakels löscht). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blocckette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreift und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart Contracts erfolgen, der insbesondere in einer Transaktion des verteilten Datenbanksystems gespeichert ist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 veranschaulicht schematisch eine Blockbildungs-Einrichtung gemäß einem ersten Ausführungsbeispiel;
Fig. 2 zeigt ein Ablaufdiagramm eines Blockbildungs-Verfahrens gemäß dem ersten Ausführungsbeispiel;
Fig. 3 veranschaulicht schematisch eine Knoteneinrichtung gemäß einem zweiten Ausführungsbeispiel;
Fig. 4 zeigt ein Ablaufdiagramm eines Blockbestätigungs-Verfahrens gemäß dem zweiten Ausführungsbeispiel;
Fig. 5 veranschaulicht schematisch eine Knoteneinrichtung gemäß einer Weiterbildung des ersten und zweiten Ausführungsbeispiels;
Fig. 6 veranschaulicht ein verteiltes Datenbanksystem gemäß einem dritten Ausführungsbeispiel;
Fig. 7 veranschaulicht einen Zeittakt des verteilten Datenbanksystems gemäß einer Variante des dritten Ausführungsbeispiels;
Fig. 8 veranschaulicht schematisch einen unbestätigten Block gemäß Ausführungsbeispielen;
Fig. 9 veranschaulicht ein Transaktionsbuch des verteilten Datenbanksystems gemäß einer Variante des dritten Ausführungsbeispiels; und
Fig. 10 veranschaulicht ein verteiltes Datenbanksystem gemäß einem vierten Ausführungsbeispiel.

In den Figuren sind gleiche oder funktionsgleiche Elemente mit denselben Bezugszeichen versehen worden, sofern nichts anderes angegeben ist.

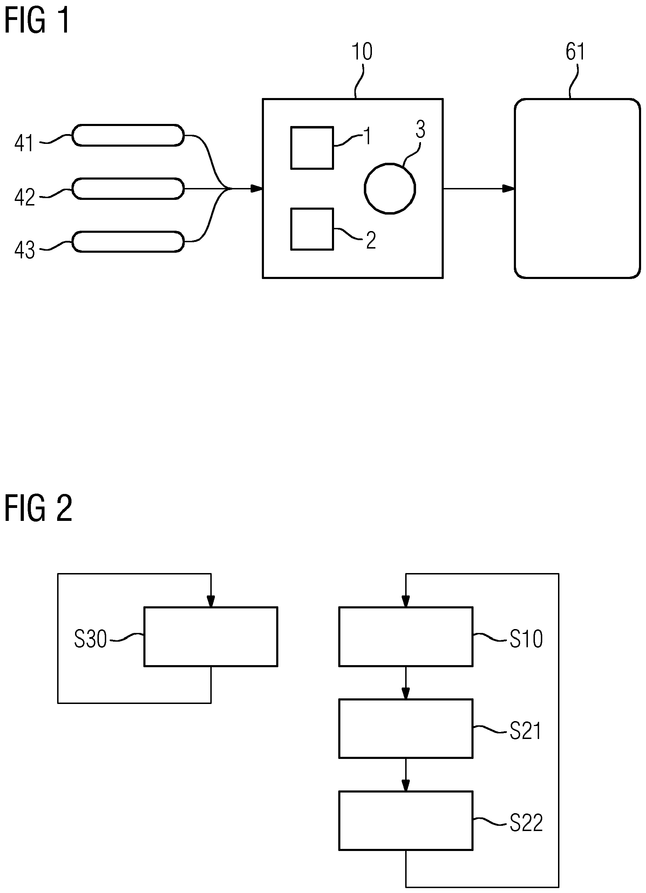

Fig. 1 veranschaulicht schematisch eine Blockbildungs-Einrichtung 10 und Fig. 2 zeigt ein Ablaufdiagramm eines Blockbildungs-Verfahrens gemäß dem ersten Ausführungsbeispiel. Die Blockbildungs-Einrichtung 10 und das Blockbildungs-Verfahren gemäß dem ersten Ausführungsbeispiel werden nun anhand von Fig. 1 und Fig. 2 beschrieben.

Die Blockbildungs-Einrichtung 10 weist eine erste Einheit 1, eine zweite Einheit 2 und eine dritte Einheit 3 auf. In einem verteilten Datenbanksystem (nicht gezeigt), dem die Blockbildungs-Einrichtung 10 angehört, sind eine Anzahl unbestätigter Transaktionen 41, 42, 43 bereitgestellt. Somit ist die Anzahl unbestätigter Transaktionen 41, 42 43 auch der Blockbildungs-Einrichtung 10 bereitgestellt.

Die Blockbildungs-Einrichtung 10 ist eingerichtet, aus ausgewählten der unbestätigten Transaktionen 41, 42, 43 zeitgetaktet einen jeweiligen unbestätigten Block 61 zu bilden, der von Knoteneinrichtungen (nicht gezeigt) des verteilten Datenbanksystems (nicht gezeigt) durch Aufnahme in ein Transaktionsbuch des verteilten Datenbanksystems gemäß einer Konsensregel des verteilten Datenbanksystems bestätigt werden kann.

Im Speziellen ist die dritte Einheit 3 ein Zeitempfänger. In Schritt S30 empfängt die dritte Einheit 3 wiederholt bzw. zyklisch einen Zeittakt von einer Zeitquelle (nicht gezeigt). Die Zeitquelle kann eine interne Zeitquelle der Blockbildungs-Einrichtung 1 oder eine externe Zeitquelle sein. Der Zeittakt kann eine Abfolge von Zeitimpulsen oder eine Abfolge von Zeitangaben sein. Basierend auf dem empfangenen Zeittakt bestimmt die dritte Einheit 3 Zeitscheiben von vorgegebener Länge.

Während einer jeweiligen der Zeitscheiben vollführen die erste Einheit 1 und die zweite Einheit 2 der Blockbildungs-Einrichtung 10 genau einmal die folgenden Schritte:
In Schritt S10 wählt die erste Einheit 1 aus den bereitgestellten unbestätigten Transaktionen 41, 42, 43 eine Anzahl zu bestätigender Transaktionen aus.
In Schritt S20 bildet die zweite Einheit 2 aus den ausgewählten zu bestätigenden Transaktionen einen unbestätigten Block 61.

Insbesondere kann die zweite Einheit 2 die ausgewählten zu bestätigenden Transaktionen 41, 42, 43 auf Gültigkeit prüfen und ungültige Transaktionen verwerfen. Insbesondere kann die zweite Einheit 2 den unbestätigten Block 61 gemäß einer in dem verteilten Datenbanksystem vereinbarten Konsensregel bilden. Insbesondere kann die zweite Einheit 2 einen von der Konsensregel geforderten Nachweiswert, wie beispielsweise einen Proof-of-Work, in den zu bildenden unbestätigten Block 61 einfügen.

Die zweite Einheit 2 schließt das Bilden des unbestätigten Blocks 61 innerhalb der jeweiligen Zeitscheibe garantiert ab und stellt den gebildeten unbestätigten Block 61 in dem verteilten Datenbanksystem (nicht gezeigt) bereit. Beispielsweise kann die zweite Einheit 2 den gebildeten unbestätigten Block 61 an mindestens eine weitere Knoteneinrichtung (nicht gezeigt) des verteilten Datenbanksystems übertragen.

Die Blockbildungs-Einrichtung 10 ermöglicht vorteilhafterweise, dass innerhalb einer jeden Zeitscheibe genau ein unbestätigter Block gebildet wird.

Gemäß einer bevorzugten Weiterbildung wählt die erste Einheit 1 in der jeweiligen Zeitscheibe alle in dem verteilten Datenbanksystem bereitgestellten unbestätigten Transaktionen 41-43 aus. Demgemäß kann sichergestellt werden, dass innerhalb jeder Zeitscheibe alle bereitgestellten unbestätigten Transaktionen in den genau einen unbestätigten Block aufgenommen werden.

Gemäß einer weiteren bevorzugten Weiterbildung wählt die erste Einheit 1 in der jeweiligen Zeitscheibe alle in dem verteilten Datenbanksystem bereitgestellten unbestätigten Transaktionen 41-43 aus, die einer vorbestimmten Bedingung entsprechen. Demgemäß kann sichergestellt werden, dass innerhalb jeder Zeitscheibe mindestens alle diejenigen bereitgestellten unbestätigten Transaktionen in den genau einen unbestätigten Block aufgenommen werden, die der vorbestimmten Bedingung entsprechen. Beispielsweise werden alle unbestätigten Transaktionen ausgewählt, die als zeitkritisch markiert sind, die als Sensorwert-Transaktion oder Messwert-Transaktion oder Steuerbefehl-Smart-Contract markiert sind, oder dergleichen.

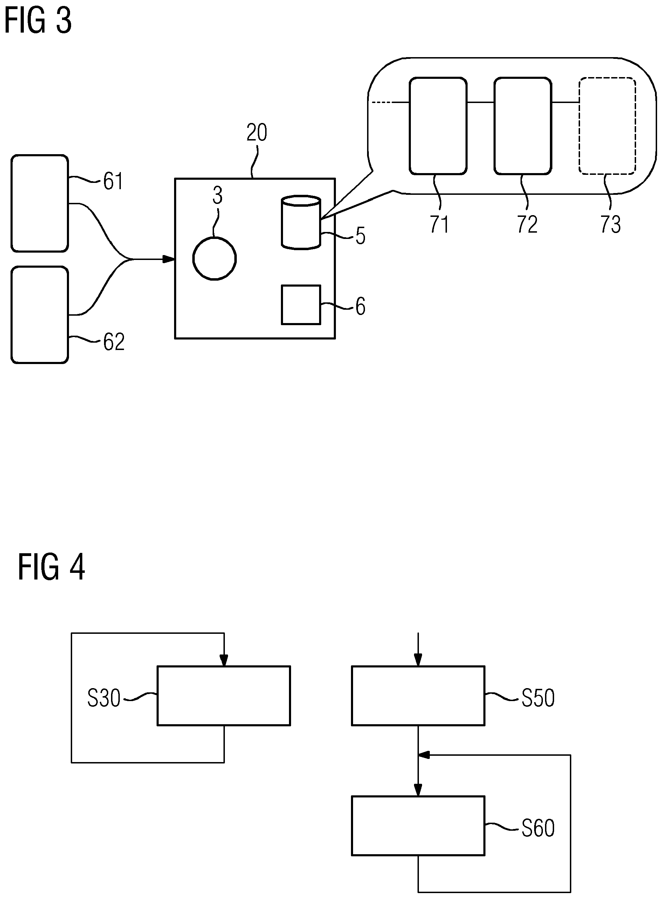

Fig. 3 veranschaulicht schematisch eine Knoteneinrichtung 20 und Fig. 4 zeigt ein Ablaufdiagramm eines Blockbestätigungs-Verfahrens gemäß einem zweiten Ausführungsbeispiel. Es wird auf Fig. 3 und 4 Bezug genommen.

Die Knoteneinrichtung 20 weist eine dritte Einheit 3, eine fünfte Einheit 5 und eine sechste Einheit 6 auf. In der fünften Einheit 5 ist eine Kette von zuvor bestätigten Blöcken 71, 72 gespeichert, die ein Transaktionsbuch eines verteilten Datenbanksystems (nicht gezeigt) repräsentiert. In dem verteilten Datenbanksystem (nicht gezeigt), dem die Knoteneinrichtung 20 angehört, sind eine Anzahl unbestätigter Blöcke 61, 62 bereitgestellt. Das Bereitstellen ist beispielsweise durch eine Anzahl Blockbildungs-Einrichtungen 10 in Fig. 1 erfolgt.

Die Knoteneinrichtung 20 ist dazu eingerichtet, zeitgetaktet aus den in dem verteilten Datenbanksystem bereitgestellten unbestätigten Blöcken 61, 62 einen zu bestätigten Block auszuwählen und den ausgewählten zu bestätigenden Block zu bestätigen, so dass der bestätigte Block 73 an die Kette von bestätigten Blöcken 71, 72, 73 angefügt ist.

Im Speziellen ist die dritte Einheit 3 ein Zeitempfänger. In Schritt S30 empfängt die dritte Einheit 3 wiederholt bzw. zyklisch einen Zeittakt von einer Zeitquelle (nicht gezeigt). Basierend auf dem empfangenen Zeittakt bestimmt die dritte Einheit 3 Zeitscheiben von vorgegebener Länge.

Während einer jeweiligen der Zeitscheiben vollführt die sechste Einheit 6 genau einmal den folgenden Schritt:
In Schritt S60 wählt die sechste Einheit 6 genau einen aus den unbestätigten Blöcken 61, 62 aus und bestätigt den ausgewählten Block. Hierbei wird der ausgewählte Block als bestätigter Block 73 an die Kette von zuvor bestätigten Blöcken 71, 72 angefügt, so dass der bestätigte Block 73 an die Kette von bestätigten Blöcken 71, 72, 73 angefügt ist.

Insbesondere kann die sechste Einheit 6 den zu bestätigenden Block unter den in der jeweiligen Zeitscheibe bereitgestellten unbestätigten Blöcken 61, 62 gemäß einer Konsensregel der verteilten Datenbank auswählen.

Insbesondere kann die sechste Einheit 6 hierbei jeden der in der jeweiligen Zeitscheibe bereitgestellten unbestätigten Blöcke 61, 62, der an die Kette von zuvor bestätigten Blöcken 71, 72 anfügbar ist, gemäß der Konsensregel überprüfen. Wird mehr als einer der unbestätigten Blöcke 61, 62 erfolgreich überprüft, kann die Konsensregel kann hierbei Kriterien für das Auswählen eines der überprüften unbestätigten Blöcke 61, 62 vorgeben.

Derjenige der unbestätigten Blöcke 61, 62, der bestätigt werden soll, wird von der sechsten Einheit 6 an die Kette von zuvor bestätigten Blöcken 71, 72 angefügt und wird dadurch zu einem weiteren bestätigten Block 73 der Kette von bestätigten Blöcken 71, 72, 73. Hierdurch werden insbesondere die unbestätigten Transkationen des zu bestätigten Blocks zu in dem Transaktionsbuch bestätigten Transkationen des bestätigten Blocks 73.

Die sechste Einheit 6 schließt den Schritt S60 innerhalb der jeweiligen Zeitscheibe garantiert ab.

Die Knoteneinrichtung 20 ermöglicht vorteilhafterweise, dass innerhalb einer jeden Zeitscheibe genau ein bestätigter Block an die Kette aus bestätigten Blöcken angefügt wird.

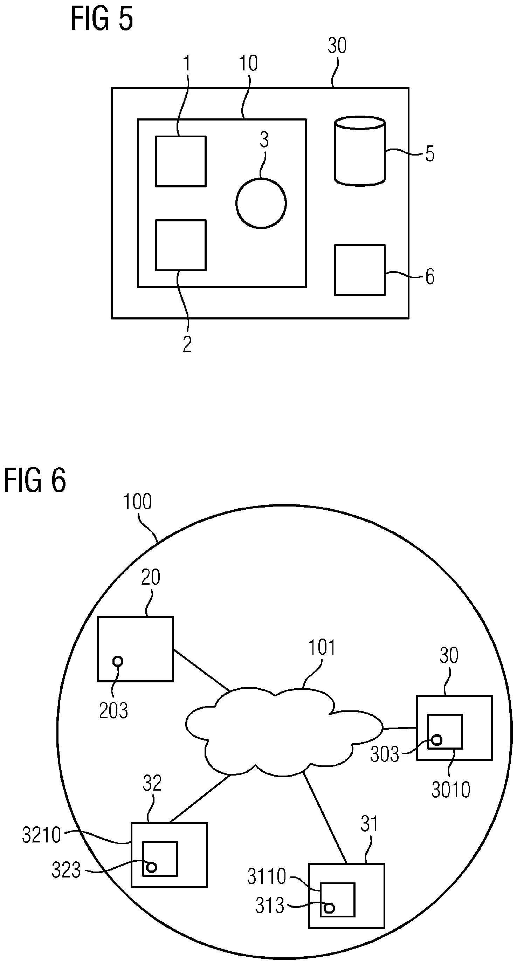

Fig. 5 veranschaulicht schematisch eine Knoteneinrichtung 30 gemäß einer Weiterbildung des ersten und zweiten Ausführungsbeispiels.

Die Knoteneinrichtung 30 umfasst eine Blockbildungseinrichtung 10 in Fig. 1 gemäß dem ersten Ausführungsbeispiel und die Elemente der Knoteneinrichtung (20 in Fig. 3) gemäß dem zweiten Ausführungsbeispiel. Die dritte Einheit 3 ist dabei nur einmal vorgesehen und taktet gemäß der vorliegenden Weiterbildung sowohl den Betrieb der ersten Einheit 1 und der zweiten Einheit 2 der Blockbildungs-Einrichtung 10 als auch den Betrieb der sechsten Einheit 6 der Knoteneinrichtung 30. Anders gesagt verfügt die Knoteneinrichtung 30 insbesondere sowohl über Funktionalität zum Bilden unbestätigter Blöcke (beispielsweise Mining-Funktionalität) als auch über Funktionalität zum Bestätigen von unbestätigten Blöcken, die von anderen Blockbildungs-Einrichtungen als der Blockbildungs-Einrichtung 10 desselben verteilten Datenbanksystems bereitgestellt werden.

Fig. 6 veranschaulicht ein verteiltes Datenbanksystem 100 gemäß einem dritten Ausführungsbeispiel.

Das verteilte Datenbanksystem 100 umfasst mehrere Knoteneinrichtungen 20, 30, 31, 32, die mittels eines Netzwerks 101 vernetzt sind. Die Knoteneinrichtung 20 ist eine Knoteneinrichtung 20 gemäß dem zweiten Ausführungsbeispiel, die lediglich über Funktionalität zum Bestätigen unbestätigter Blöcke verfügt. Die Knoteneinrichtungen 30, 31 und 32 sind Knoteneinrichtungen gemäß der Weiterbildung, die zusätzlich eine jeweilige Blockbildungs-Einrichtung 3010, 3110, 3210 (Instanzen der Blockbildungs-Einrichtung 10 aus Fig. 1) umfassen.

Eine jede der Knoteneinrichtungen 20, 30, 31, 32 weist eine jeweilige dritte Einheit 203, 303, 313, 323 auf. Die weiteren Einheiten der Knoteneinrichtungen 20, 30, 31, 32 entsprechen denen des ersten bzw. zweiten Ausführungsbeispiels, sind der Einfachheit halber jedoch nicht dargestellt.

Jeder der Knoteneinrichtungen 20, 30, 31, 32 empfängt mit ihrer jeweiligen dritten Einheit 203, 303, 313, 323 einen Zeittakt. Die jeweils empfangenen Zeittakte sind synchron.

Somit wird das verteilte Datenbanksystem 100 vorteilhaft zeitsynchronisiert gemäß einem gemeinsamen Zeittakt des verteilten Datenbanksystems 100 betrieben; die jeweiligen ersten, zweiten und sechsten Einheiten der jeweiligen Knoteneinrichtungen 20, 30, 31, 32 führen die ihnen jeweils zugeordneten Schritte S20, S30, S60 synchron während einer jeweils selben Zeitscheibe durch.

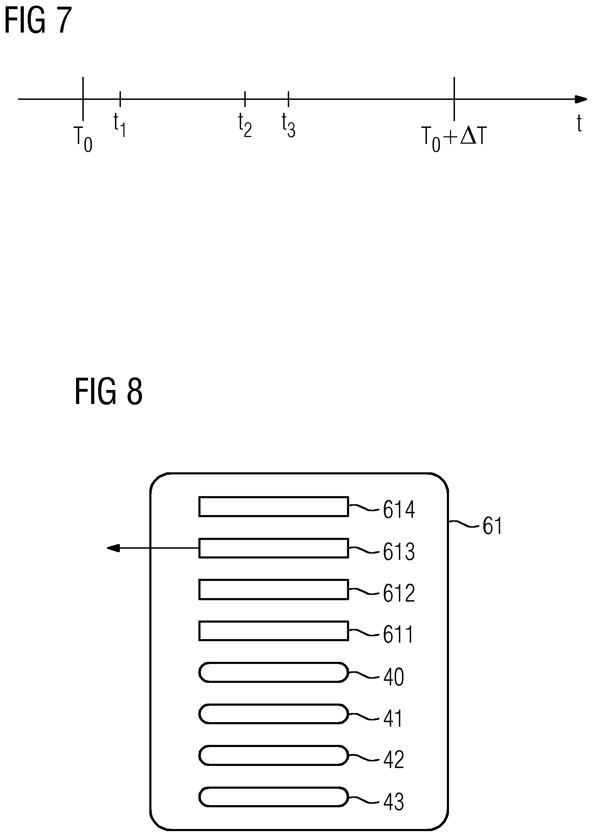

Fig. 7 veranschaulicht einen Zeittakt des verteilten Datenbanksystems 100 gemäß einer Variante des dritten Ausführungsbeispiels. Fig. 7 wird unter Rückbezug auf Fig. 1, 3 und 6 beschrieben.

Zu einem Zeitpunkt T0 beginnt eine Zeitscheibe einer jeweiligen der Knoteneinrichtungen 20, 30, 31, 32.

Ein erster Zeitabschnitt der Zeitscheibe beginnt bei der Zeit T0. Während des ersten Zeitabschnitts kann jede der Knoteneinrichtungen 20, 30, 31, 32 unbestätigte Transaktionen 41, 42, 43 in dem verteilten Datenbanksystem 100 bereitstellen.

Beispielsweise kann die Knoteneinrichtung 20 mit einer Automatisierungskomponente eines industriellen Automatisierungssystems verbunden sein und eine unbestätigte Transaktion erstellen, die einen zu Beginn der Zeitscheibe ermittelten Sensorwert repräsentiert. Die Knoteneinrichtung 32 kann über eine Benutzerschnittstelle verfügen und kann beispielsweise eine unbestätigte Transaktion bereitstellen, die einen von einem Benutzer programmierten Smart Contract mit Steuerbefehlen für das industrielle Automatisierungssystem umfasst.

Das verteilte Datenbanksystem 100 ist derart gestaltet, dass sichergestellt ist, dass eine jede bereitgestellte unbestätigte Transaktion rechtzeitig vor dem Zeitpunkt t1 der Zeitscheibe alle der Knoteneinrichtungen 20, 30, 31, 32 erreicht hat.

Jede der Blockbildungs-Einrichtungen 3010, 3110, 3210 empfängt die bereitgestellten unbestätigten Transaktionen 41, 42, 43 und wählt eine Anzahl zu bestätigender Transaktionen aus. Zum Beispiel können mindestens alle zeitkritischen unbestätigten Transaktionen ausgewählt werden. Nicht ausgewählte unbestätigte Transaktionen 41, 42, 43 können gespeichert und für eine spätere Zeitscheibe vorgehalten oder verworfen werden.

Der erste Zeitabschnitt, während dessen unbestätigte Transaktionen 41, 42, 43 bereitgestellt und ausgewählt werden, endet zum Zeitpunkt t1.

Zum Zeitpunkt t1 beginnt ein zweiter Zeitabschnitt der Zeitscheibe. Die Knoteneinrichtung 20 bleibt während des zweiten Zeitabschnitts untätig. Die Knoteneinrichtungen 30, 31, 32 bilden während des zweiten Zeitabschnitts jeweils einen unbestätigten Block 60, 61 aus den ausgewählten unbestätigten Transaktionen 41, 42, 43 wie vorstehend anhand des ersten Ausführungsbeispiels beschrieben. Auch wenn das Bilden eines Blocks bei einer verteilten Datenbank, die beispielsweise gemäß Blockketten-Technologie betrieben wird, ein zeitaufwendiger Vorgang sein kann, ist doch die Konsensregel und sind die Knoteneinrichtungen 20, 30, 31, 32 des verteilten Datenbanksystems 100 derart eingerichtet, dass das Bilden der unbestätigten Blöcke 60, 61 bis zu dem Zeitpunkt t2, an dem der zweite Zeitabschnitt endet, garantiert abgeschlossen ist.

Zum Zeitpunkt t2 beginnt ein dritter Zeitabschnitt der Zeitscheibe. Während des dritten Zeitabschnitts stellen die Blockbildungs-Einrichtungen 3010, 3110, 3210 den von ihnen jeweils gebildeten unbestätigten Block 61, 62 in dem verteilten Datenbanksystem 100 bereit, und die jeweils anderen der Knoteneinrichtungen 20, 30, 31, 32 empfangen die bereitgestellten unbestätigten Blöcke 61, 62. Das Bereitstellen und Empfangen der bereitgestellten unbestätigten Blöcke endet zum Zeitpunkt t3. Zum Zeitpunkt t3 endet der dritte Zeitabschnitt.

Zum Zeitpunkt t3 beginnt ein vierter Zeitabschnitt der Zeitscheibe. Während des vierten Abschnitts bestätigen die Knoteneinrichtungen 20, 30, 31, 32 jeweils genau einen der im dritten Zeitabschnitt bereitgestellten unbestätigten Blöcke 60, 62, wobei sie den bestätigten Block 73 an die in der fünften Einheit 6 der jeweiligen Knoteneinrichtung 20, 30, 31, 32 gespeicherte Kette von bestätigten Blöcken anfügen, wie vorstehend für das zweite Ausführungsbeispiel beschrieben. Zum Zeitpunkt T0+ΔT endet der vierte Zeitabschnitt und damit endet auch die Zeitscheibe.

Auf diese Weise wird das verteilte Datenbanksystem 100 zeitgetaktet und zeitsynchronisiert betrieben, so dass gewährleistet werden kann, dass innerhalb einer vorgegebenen Zeitspanne ΔT (Länge einer Zeitscheibe) eine bereitgestellte unbestätigte Transaktion 41, 42, 43 als bestätigte Transaktion in die Repräsentationen des Transaktionsbuchs des verteilten Datenbanksystems 100 der jeweiligen Knoteneinrichtungen 20, 30, 31, 32 übernommen wird.

Fig. 8 veranschaulicht schematisch den Aufbau eines unbestätigten Blocks 61 gemäß Ausführungsbeispielen. Es sei angemerkt, dass der veranschaulichte Aufbau eines unbestätigten Blocks 61 entsprechend auch für einen jeweiligen bestätigten Block 71, 72, 73 (Fig. 3) gilt und Letzterer daher nicht erneut beschrieben wird. Die Beschreibung erfolgt anhand von Fig. 8 und unter Rückbezug auf die Fig. 1, 3 und 6.

Der unbestätigte Block 61 ist beispielsweise ein unbestätigter Block 61, der von der Blockbildungs-Einrichtung 10 (Fig. 1) gebildet worden ist, und ist wie folgt aufgebaut:
Der unbestätigte Block 61 umfasst eine Anzahl unbestätigter Transaktionen 41, 42, 43 sowie einen Hash-Wert 611, der beispielsweise ein Merkle-Root (Wurzelwert eines kryptographischen Hash-Baums) ist und die unbestätigten Transaktionen 41, 42, 43 gegen nachträgliche Manipulationen schützt.

Außerdem kann der unbestätigte Block 61, sofern die Konsensregel des verteilten Datenbanksystems 100 dies vorsieht, eine unbestätigte Coinbase-Transaktion 40 umfassen. Die Coinbase-Transaktion 40 wird von der Blockbildungs-Einrichtung 10 selbst erzeugt und kann der Blockbildungs-Einrichtung 10, bzw. einer diese umfassenden Knoteneinrichtung 30 (Fig. 5) eine vorbestimmte Vergütung für das Bilden des Blocks gewähren.

Der unbestätigte Block 61 umfasst optional ferner einen Zeitstempel 612, welcher die Zeitscheibe identifiziert, in welcher der unbestätigte Block 61 gebildet worden ist.

Der unbestätigte Block 61 umfasst einen Verkettungs-Hashwert 613, welcher ein kryptographischer Hash-Wert des letzten bestätigten Blocks einer der Blockbildungs-Einrichtung 10 bekannten Repräsentation des Transaktionsbuchs des verteilten Datenbanksystems 100 sein kann.

Der unbestätigte Block 61 umfasst außerdem einen Nachweiswert 614, bei dem es sich gemäß einem Beispiel um einen Nonce-Wert handelt, der einen sogenannten Best-Effort-Proof-of-Work darstellt. Insbesondere kann die Blockbildungs-Einrichtung 10, nachdem sie den unbestätigten Block 61 gebildet hat, verbleibende Zeit bis zum Ende des zweiten Zeitabschnitts zum Zeitpunkt t2 (Fig. 7) nutzen, um durch Ausprobieren den Nonce-Wert derart zu bestimmen, dass ein Hash-Wert des gesamten unbestätigten Blocks 61 möglichst extremal, wie beispielsweise möglichst gering, ist.

Auf diese Weise kann die Blockbildungs-Einrichtung 10 nachvollziehbar ihr berechtigtes Interesse an der Aufnahme des Blocks in das Transaktionsbuch des verteilten Datenbanksystems 100 dokumentieren. Dieser Arbeitsnachweis, auch Best-Effort-Proof-of-Work genannt, kann mit Sicherheit innerhalb des zweiten Zeitabschnitts t2 erbracht werden.

Anhand des unbestätigten Blocks 61 wird nun eine Konsensregel des verteilten Datenbanksystems 100 genauer beschrieben. Die nachstehend beschriebenen Kriterien der Konsensregel können auf geeignete Weise kombiniert werden. Die nachstehend beschriebenen Kriterien können von einer jeweiligen Knoteneinrichtung 20, 30, 31, 32 des verteilten Datenbanksystems 100 benutzt werden, um während des vierten Zeitabschnitts von t3 bis T0+ΔT (Fig. 7) der jeweiligen Zeitscheibe einen jeweiligen unbestätigten Block 61, 62 zu prüfen und unter allen erfolgreich geprüften unbestätigten Blöcken 61, 62 genau einen zu bestätigenden Block auszuwählen. Die Konsensregel wird beispielhaft anhand der Knoteneinrichtung 20 in Fig. 3 und dem unbestätigten Block 61 in Fig. 8 beschrieben. Es versteht sich, dass die weiteren Knoteneinrichtungen 30, 31, 32 gemäß derselben Konsensregel arbeiten.

Insbesondere lautet ein Kriterium der Konsensregel, dass der Merkle-Root 611 einem Wurzelwert eines aus den unbestätigten Transaktionen 41, 42, 43 des unbestätigten Blocks aufgebauten Merkle-Baums entsprechen muss. Auf diese Weise kann sichergestellt werden, dass der unbestätigte Block 61 während des Bereitstellens nicht unautorisiert modifiziert wurde.

Insbesondere lautet ein Kriterium der Konsensregel, dass der Verkettungs-Hashwert 611 ein gültiger Hash-Wert des letzten bzw. eines vorangehenden der in der fünften Einheit 5 der Knoteneinrichtung 20 gespeicherten Kette von bestätigten Blöcken 71, 72, 73 sein muss. Derart kann ermittelt werden, ob und an welcher Position der unbestätigte Block 61 an die Kette bestätigter Blöcke 71, 72, 73 anfügbar ist oder zu verwerfen ist.

Insbesondere lautet ein Kriterium der Konsensregel, dass jede der unbestätigten Transaktionen 41, 42, 43 eine gültige Transaktion sein muss. Unter einer gültigen Transaktion kann verstanden werden, dass die betreffende Transaktion einen aktuellen Zustand, der durch die Abfolge von bestätigten Transaktionen der in der fünften Einheit 5 gespeicherten Repräsentation des Transaktionsbuchs des verteilten Datenbanksystems 100 in einen neuen gültigen Zustand überführt. Beispielsweise kann eine der unbestätigten Transaktionen 41, 42, 43 dann als gültige Transaktion 41, 42, 43 behandelt werden, wenn ein in der Transaktion umfasster oder von der Transaktion referenzierter Smart Contract fehlerfrei ausgeführt wird.

Insbesondere kann ein Kriterium der Konsensregel lauten, dass der Zeitstempel 612 des unbestätigten Blocks 61 eine Zeitscheibe bezeichnet, die mit der aktuellen Zeitscheibe übereinstimmt. Derart kann kontrolliert werden, ob die Zeittaktung des verteilten Datenbanksystems 100 störungsfrei arbeitet.

Insbesondere kann ein Kriterium der Konsensregel lauten, dass der unbestätigte Block 61 alle unbestätigten Transaktionen 41, 42, 43 umfassen muss, die während des ersten Zeitabschnitts zwischen T0 und t1 (Fig. 7) bereitgestellt wurden und einer vorbestimmten Bedingung entsprechen. Anders ausgedrückt kann auch die Knoteneinrichtung 20 die in dem verteilten Netzwerk 100 während der jeweiligen Zeitscheibe bereitgestellten unbestätigten Transaktionen 41, 42, 43 empfangen und vorhalten, um später während derselben Zeitscheibe überprüfen zu können, ob alle der Bedingung entsprechenden unbestimmten Transaktionen korrekt in den unbestätigten Block 61 aufgenommen worden sind. Die vorbestimmte Bedingung kann beispielsweise lauten, dass alle unbestätigten Transaktionen 40, 41, 42 aufzunehmen sind, die als zeitkritisch markiert sind und/oder Steuerbefehle, Messwerte oder Steuerwerte eines industriellen Automatisierungssystems betreffen. Somit kann die Echtzeitfähigkeit des verteilten Datenbanksystems 100 gewährleistet werden.

Die vorgenannten Kriterien können von der jeweiligen Knoteneinrichtung 20, 30, 31, 32 angewendet werden, um unbestätigte Blöcke 61, die mindestens eines der vorgenannten Kriterien nicht erfüllen, als ungültig zu verwerfen. Weitere nachstehend genannte Kriterien können benutzt werden, um unter mehreren gültigen, geprüften unbestätigten Blöcken 61, 62 denjenigen Block auszuwählen, der bestätigt wird.

Insbesondere kann ein Kriterium der Konsensregel lauten, dass derjenige unbestätigte Block 61, 62 ausgewählt wird, der eine möglichst hohe Anzahl unbestätigter Transaktionen 41, 42, 43, bzw. unbestätigter Transaktionen 41, 42, 43 einer bestimmten Art umfasst. Auf diese Weise kann ein Anreiz zur Verbesserung des Transaktionsdurchsatzes und/oder der Echtzeitfähigkeit der verteilten Datenbank 100 geschaffen werden.

Insbesondere kann ein Kriterium der Konsensregel lauten, dass derjenige unbestätigte Block 61, 62 mit dem besten Nachweiswert 614 ausgewählt wird. So kann etwa derjenige unbestätigte Block 61, 62 ausgewählt werden, dessen Hash-Wert, in welchen auch der Nachweiswert 614 einfließt, besonders extremal ist, wie beispielsweise am niedrigsten ist, am höchsten ist, oder eine möglichst hohe Anzahl führender binärer Nullen oder führender binärer Einsen aufweist. Auf diese Weise kann vorteilhaft eine Konkurrenzsituation zwischen mehreren unbestätigten Blöcken 61, 62 aufgelöst werden und ein Anreiz für die Blockbildungs-Einrichtungen 10 des verteilten Netzwerks 100 geschaffen werden, einen möglichst guten Best-Effort-Proof-of-Work zu erbringen.

Das vorstehend beschriebene Kriterium kann insbesondere derart modifiziert sein, dass neben der Güte des Nachweiswerts 614 auch eine Güte bzw. rechnerische Komplexität der von dem unbestätigten Block 61, 62 umfassten unbestätigten Transaktionen 41, 42, 43 berücksichtigt wird. So kann etwa ein unbestätigter Block 61 gegenüber einem weiteren unbestätigten Block 62 auch dann bevorzugt werden, wenn der unbestätigte Block 61 einen weniger hochwertigen Nachweiswert 614 enthält als der weitere unbestätigte Block 62 (wenn der Hash-Wert des unbestätigten Blocks 61 weniger extremal ist als der Hash-Wert des weiteren unbestätigten Blocks 62), wenn jedoch der unbestätigte Block 61 eine entsprechend höhere Anzahl an rechnerisch komplexen unbestätigten Transaktionen 41, 42, 43 umfasst. Unter einer rechnerisch komplexen unbestätigten Transaktion 41, 42, 43 kann eine Transaktion verstanden werden, deren Überprüfung im Rahmen des Bildens des unbestätigten Blocks 61 eine hohe Rechenlast auf der betreffenden Blockbildungs-Einrichtung 10 generiert bzw. viel Rechenzeit der betreffenden Blockbildungs-Einrichtung 10 beansprucht. Auf diese Weise kann vorteilhaft verhindert werden, dass eine Blockbildungs-Einrichtung 10 benachteiligt wird, die viele rechnerisch komplexe Transaktionen 41, 42, 43 in einen unbestätigten Block 61 aufnimmt, und der aufgrund dessen innerhalb des zweiten Zeitabschnitts zwischen t1 und t2 (Fig. 7) nur wenig Rechenzeit für die Ermittlung des Nachweiswerts 614 vor Ende des zweiten Zeitabschnitts bleibt.

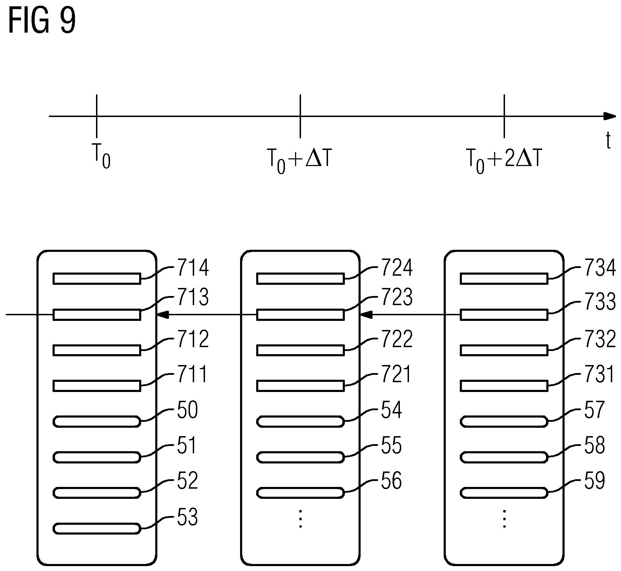

Fig. 9 veranschaulicht ein Transaktionsbuch des verteilten Datenbanksystems 100 gemäß einer bevorzugten Variante des dritten Ausführungsbeispiels.

Fig. 9 zeigt eine Kette von bestätigten Blöcken 71, 72, 73, wie sie in der fünften Einheit (Fig. 3) einer jeweiligen Knoteneinrichtung 20, 30, 31, 32 (Fig. 6) des verteilten Datenbanknetzwerks 100 (Fig. 6) gespeichert sein kann. Die Kette von bestätigten Blöcken 71, 72, 73 repräsentiert dabei ein Transaktionsbuch des verteilten Datenbanknetzwerks 100 (Fig. 6). Nachstehend wird auf Fig. 9 und Fig. 6 Bezug genommen.

Ein jeder der bestätigten Blöcke 71, 72, 73 umfasst einen Nachweiswert 714, 724, 734, einen Verkettungs-Hashwert 713, 723, 733, einen Zeitstempel 712, 722, 732, einen Merkle-Root 711, 721, 731 und jeweilige unbestätigte Transaktionen 50-53, 54-56, 57-59. Die genannten Elemente entsprechen den entsprechenden Elementen des unbestätigten Blocks 61, die in anhand von Fig. 8 beschrieben wurden.

Wie in Fig. 9 gezeigt, sind die Blöcke 71, 72, 73 über die Verkettungs-Hashwerte 713, 723, 733 derart verkettet, dass ein jeweils nachfolgender Block 72, 73 einen Verkettungs-Hashwert 713, 723, 733 des jeweils vorangehenden Blocks 71, 72 umfasst. So kann die Blockkette vor Manipulationen geschützt werden.

Fig. 9 zeigt weiterhin eine Zeitachse, die die Startzeitpunkte T0, T0+ΔT, T0+2ΔT jeweiliger Zeitscheiben bezeichnet. Der bestätigte Block 71 wurde in der dem Zeitpunkt T0 zugehörigen Zeitscheibe gebildet und bestätigt. Der bestätigte Block 72 wurde in der Zeitscheibe ab T0+ΔT gebildet. Der bestätigte Block 73 wurde in der Zeitscheibe ab T0+2ΔT gebildet. Dementsprechend enthält der Zeitstempel 712 des bestätigten Blocks 71 den Wert "T0", der Zeitstempel 722 enthält den Wert "T0+ΔT" und der Zeitstempel 732 enthält den Wert "T0+2ΔT".

Wie in Fig. 9 zu sehen, wird in dem verteilten Datenbanknetzwerk 100 in vorgegebenen Zeitabständen ΔT jeweils genau ein bestätigter Block an das Transaktionsbuch angefügt.

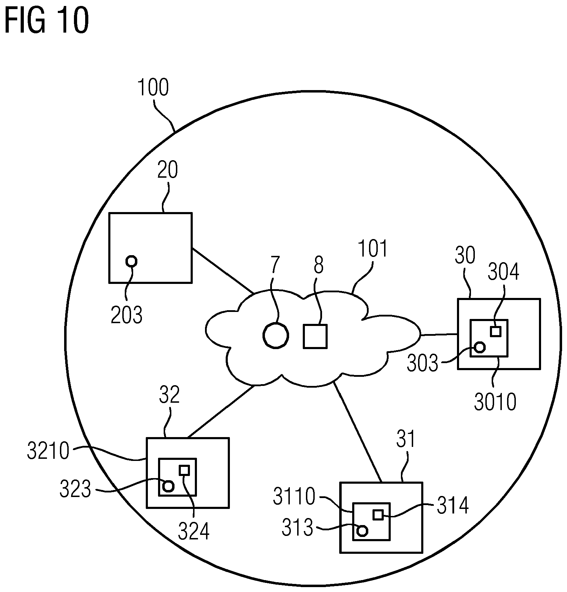

Fig. 10 veranschaulicht ein verteiltes Datenbanksystem 100 gemäß einem vierten Ausführungsbeispiel. Die Beschreibung von Fig. 10 erfolgt unter Rückbezug auf Fig. 1, 3 und 6. Das in Fig. 10 gezeigte verteilte Datenbanksystem 100 gemäß dem vierten Ausführungsbeispiel entspricht dem in Fig. 6 gezeigten verteilten Datenbanksystem 100 gemäß dem dritten Ausführungsbeispiel, und gleiche Elemente werden nicht erneut beschrieben. Im Folgenden wird unter Bezug auf Fig. 10, Fig. 6, Fig. 3 und Fig. 1 nur auf Unterschiede des vierten Ausführungsbeispiels eingegangen.

Das verteilte Datenbanksystem 100 gemäß dem vierten Ausführungsbeispiel weist eine in dem Netzwerk 101 bereitgestellte zentrale Zeitquelle 7 auf. Die jeweilige dritte Einheit 203, 303, 313, 323 ist dazu eingerichtet, den Zeittakt von der zentralen Zeitquelle 7 zu empfangen. Bei der Zeitquelle 7 kann es sich um einen DCF77-Zeitsender, einen NTP- oder PTP-Server oder einen Taktgeber eines industriellen Automatisierungssystems handeln. Auf diese Weise kann der jeweilige Zeittakt der Knoteneinrichtungen 20, 30, 31, 32 besonders einfach synchron gehalten werden.

Das verteilte Datenbanksystem 100 gemäß dem vierten Ausführungsbeispiel weist ferner eine in dem Netzwerk 101 bereitgestellte Zeitplanungseinrichtung 8 auf. Die Zeitplanungseinrichtung 8 empfängt auf gleiche Weise wie die dritten Einheiten 303, 313, 323 den Zeittakt von der zentralen Zeitquelle 7 und bestimmt basierend auf dem Zeittakt jeweilige Zeitscheiben der vorgegebenen Länge.

Die jeweilige Blockbildungseinrichtung 3010, 3110, 3210 weist neben der jeweiligen ersten Einheit 1 und der jeweiligen zweiten Einheit 2 außerdem eine vierte Einheit 304, 314, 324 auf.

Zu Beginn einer jeweiligen Zeitscheibe sendet die Zeitplanungseinrichtung 8 ein Zeitplanungssignal an genau eine vierte Einheit 304, 314, 324 genau einer der Blockbildungs-Einrichtungen 3010, 3110, 3210. Die Zeitplanungseinrichtung 8 kann die genau eine Blockbildungs-Einrichtung 3010, 3110, 3210 reihum, zufällig oder nach einem anderen Zeitplan auswählen.

Die Blockbildungs-Einrichtungen 3010, 3110, 3210 gemäß dem vierten Ausführungsbeispiel sind derart eingerichtet, dass ihre jeweilige erste Einheit 1 und die zweite Einheit 2 in der jeweiligen Zeitscheibe nur dann die anhand des ersten Ausführungsbeispiels beschriebenen Schritte S10 und S20 (Fig. 2) durchführen, wenn die vierte Einheit 304, 314, 324 der betreffenden Blockbildungs-Einrichtung 3010, 3110, 3210 das Aktivierungssignal von der Zeitplanungseinrichtung 8 empfängt. Andernfalls bleiben die erste 1 und die zweite Einheit 2 in der jeweiligen Zeitscheibe, in der kein Aktivierungssignal empfangen wurde, untätig.

Demgemäß wird vorteilhaft pro Zeitscheibe nur genau ein unbestätigter Block 61 gebildet, beim Bestätigen der unbestätigten Blöcke 61, 62 durch die jeweiligen Knoteneinrichtungen 20, 30, 31, 32 kann eine Konkurrenzsituation zwischen mehreren unbestätigten Blöcken 61, 62 vermieden und es kann auf einen Best-Effort-Proof-of-Work verzichtet werden. Stattdessen kann beispielsweise ein Proof-of-Stake als Nachweiswert verwendet oder ein Permissioned Ledger genutzt werden.

Zur Erhöhung der Sicherheit kann in diesem Fall die jeweilige Knoteneinrichtung 20, 30, 31, 32 das zusätzliche Kriterium der Konsensregel anwenden, dass ein unbestätigter Block 61 nur dann erfolgreich geprüft und bestätigt wird, kann, wenn der unbestätigte Block 61 von der in der betreffenden Zeitscheibe aktivierten Blockbildungs-Einrichtung 3010, 3110, 3210 bereitgestellt worden ist.

Obwohl die vorliegende Erfindung anhand von Ausführungsbeispielen beschrieben wurde, ist sie vielfältig modifizierbar.

Der Einfachheit halber wurde lediglich das Grundprinzip eines verteilten Datenbanksystems auf Blockketten-Basis mit einem Transaktionsbuch und verketteten Blöcken, die jeweils mehrere Transaktionen umfassen, beschrieben. Die vorliegend offenbarte Lehre des zeitgetakteten Bildens und Bestätigens von Blöcken ist jedoch auch auf andere verteilte Datenbanksysteme und Weiterbildungen von Blockketten-basierten Datenbanksystemen anwendbar, wie etwa auf verteilte Datenbanksysteme mit mehreren Transaktionsbüchern, wie einem Hauptbuch und einem Seitenbuch, auf andere Arten der Verkettung wie etwa gerichtete Graphen oder blocklose Transaktionsketten und dergleichen mehr.

Bei dem verteilten Datenbanknetzwerk 100 des dritten Ausführungsbeispiels kann eine zentrale Zeitquelle 7 vorgesehen sein. Bei dem verteilten Datenbanknetzwerk 100 der vierten Ausführungsform kann auch keine zentrale Zeitquelle 7 vorgesehen sein.

Techniken der Konsensfindung wie Best-Effort-Proof-of-Work, Proof-of-Stake, Permissioned Ledger und dergleichen können beliebig kombiniert werden, solange der Nachweiswert 614 von der Blockbildungseinrichtung 10 mit Garantie innerhalb des dafür vorgesehenen Zeitabschnitts der jeweiligen Zeitscheibe erzeugt werden kann.

Anhand von Fig. 6 wurde ein Merkle-Root beschrieben, es sind jedoch auch ein Patricia-Root und andere Arten von Hash-Werten, Hash-Bäumen und sonstige Arten der kryptographischen Absicherung eines Blocks und/oder einzelner Transaktionen gegen Manipulationen denkbar.

Anhand von Fig. 7 wurde eine denkbare Unterteilung einer Zeitscheibe beschrieben, und es wurde beschrieben, dass alle Knoteneinrichtungen 20, 30, 31, 32 derart zeitsynchronisiert getaktet werden, dass eine jeweilige Zeitscheibe auf allen Knoteneinrichtungen 20, 30, 31, 32 zur gleichen Zeit beginnt. Es sind jedoch auch Ausführungsformen denkbar, bei denen der jeweilige Zeittakt der Knoteneinrichtungen 20, 30, 31, 32 auf andere Weise zeitsynchronisiert und/oder die jeweilige Zeitscheibe anders unterteilt ist. Beispielsweise könnte der Zeittakt unterschiedlicher Knoteneinrichtungen gegeneinander um einen Bruchteil der vorgegebenen Länge ΔT versetzt sein; auf diese Weise könnte etwa ein höherer Parallelisierungsgrad ohne Untätigkeitsphase einzelner Knoteneinrichtungen 20 erzielt werden.

Die vorgeschlagene Lösung kann verstanden werden als eine Blockbildungs-Einrichtung und eine Knoteneinrichtung für ein verteiltes Datenbanksystem, jeweils mit einer Einheit zum Empfangen eines Zeittakts von einer Zeitquelle und Bestimmen von Zeitscheiben vorgegebener Länge anhand des Zeittakts, wobei die Blockbildungs-Einrichtung innerhalb einer jeweiligen Zeitscheibe genau einmal zu bestätigende Transaktionen aus in dem Datenbanksystem bereitgestellten unbestätigten Transaktionen auswählt, einen unbestätigten Block aus den ausgewählten unbestätigten Transaktionen bildet und den unbestätigten Block in dem Datenbanksystem bereitstellt, und die Knoteneinrichtung eine Kette von bestätigten Blöcken speichert, welche ein Transaktionsbuch des Datenbanksystems repräsentieren, und innerhalb einer jeweiligen Zeitscheibe genau einmal genau einen aus in dem Datenbanksystem in der Zeitscheibe bereitgestellten unbestätigten Blöcken bestätigt und an die Kette von bestätigten Blöcken anfügt.

Besonders vorteilhaft kann die vorgeschlagene Lösung auf ein industrielles Automatisierungssystem angewendet werden, das eine Anzahl gemäß einem Zeittakt betreibbare Automatisierungskomponenten umfasst. Ein vorgeschlagenes verteiltes Datenbanksystem, wie etwa das verteilte Datenbanksystem 100 gemäß einem der Ausführungsbeispiele, kann mittels Smart Contracts, die Steuerlogik implementieren, und Schnittstelleneinrichtungen, die eine Schnittstelle zwischen den Knoteneinrichtungen des verteilten Datenbanksystems und den Automatisierungskomponenten des Automatisierungssystems bilden, und dergleichen dazu eingerichtet sein, die Anzahl Automatisierungskomponenten zu steuern und/oder zu regeln. Eine jeweilige Schnittstelleneinrichtung kann dazu eingerichtet sein, zu veranlassen, dass ein Messwerte einer jeweiligen Automatisierungskomponente als unbestätigte Transaktion dem Datenbanksystem 100 bereitgestellt wird, oder zu veranlassen, dass ein Steuerwert aus einer in dem verteilten Datenbanksystem 100 bestätigten Transaktion der jeweiligen Automatisierungskomponente bereitgestellt wird. Hierbei kann ein Taktgeber des Automatisierungssystems als die zentrale Zeitquelle (7 in Fig. 10) des verteilten Datenbanksystems eingesetzt werden. Somit kann ein Zeittakt des verteilten Datenbanksystems realisiert werden, der synchron mit dem Zeittakt der Anzahl Automatisierungskomponenten oder einem ganzzahligen Vielfachen davon ist. Somit können vorteilhaft Messwerte und/oder Steuerwerte in demselben Takt in dem verteilten Datenbanksystem in Form von Transaktionsdatensätzen bestätigt werden, in dem sie von den Automatisierungskomponenten geliefert werden bzw. an diese auszugeben sind. Somit kann eine Echtzeitsteuerung des industriellen Automatisierungssystems mithilfe einer auf Bloccketten-Technologie basierten verteilten Datenbank realisiert werden.

### Referenzen

[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles
   https://blockchainhub.net/blockchain-oracles/

## Patentansprüche

1. Blockbildungs-Einrichtung (10) für ein eine Anzahl Knoteneinrichtungen (20, 30-32) umfassendes verteiltes Datenbanksystem (100) mit:
einer ersten Einheit (1) zum Auswählen einer Anzahl zu bestätigender Transaktionen aus einer in dem verteilten Datenbanksystem bereitgestellten Anzahl unbestätigter Transaktionen (41-43);
einer zweiten Einheit (2) zum Bilden eines unbestätigten Blocks (61, 62) aus der ausgewählten Anzahl unbestätigter Transaktionen (41-43), wobei eine jeweilige ausgewählte unbestätigte Transaktion (41-43) auf Gültigkeit geprüft und bei nicht bestanderer Prüfung verworfen, andernfalls in den unbestätigten Block (61, 62) aufgenommen wird, und zum Bereitstellen des unbestätigten Blocks (61, 62) in dem verteilten Datenbanksystem (100); und
einer dritten Einheit (3) zum Empfangen eines Zeittakts von einer Zeitquelle (7) und zum Bestimmen von Zeitscheiben vorgegebener Länge (ΔT) anhand des Zeittakts;
wobei die erste Einheit (1) und die zweite Einheit (2) dazu eingerichtet sind, das Auswählen, das Bilden und das Bereitstellen innerhalb einer jeweiligen Zeitscheibe genau einmal durchzuführen.

2. Blockbildungs-Einrichtung nach Anspruch 1,
**dadurch gekennzeichnet,**
**dass** die erste Einheit (1) dazu eingerichtet ist, während der jeweiligen Zeitscheibe alle in dem verteilten Datenbanksystem (100) bereitgestellten unbestätigten Transaktionen (41-43), die einer vordefinierten Bedingung entsprechen, als zu bestätigende Transaktionen auszuwählen.

3. Blockbildungs-Einrichtung nach Anspruch 1 oder 2, **gekennzeichnet durch**
eine vierte Einheit (304, 314, 324) zum Empfangen eines Aktivierungssignals,
wobei die erste Einheit (1) und die zweite Einheit (2) dazu eingerichtet sind, das Auswählen, das Bilden und das Bereitstellen innerhalb der jeweiligen Zeitscheibe nur dann genau einmal durchzuführen, wenn die vierte Einheit (304, 314, 324) das Aktivierungssignal in der jeweiligen Zeitscheibe empfängt.

4. Blockbildungs-Einrichtung nach einem der Ansprüche 1 bis 3,
**dadurch gekennzeichnet,**
**dass** die zweite Einheit (2) dazu eingerichtet ist, in den gebildeten Block (61) einen besten von ihr innerhalb der jeweiligen Zeitscheibe ermittelbaren kryptographischen Arbeitsnachweis (614) aufzunehmen.

5. Blockbildungs-Einrichtung nach einem der Ansprüche 1 bis 4,
**dadurch gekennzeichnet,**
**dass** die zweite Einheit (2) dazu eingerichtet ist, in den gebildeten Block (61) einen Zeitstempel (612) aufzunehmen, der die jeweilige Zeitscheibe identifiziert.

6. Knoteneinrichtung (20, 30-32) für ein eine Anzahl Knoteneinrichtungen (20, 30-32) umfassendes verteiltes Datenbanksystem (100) mit:
einer fünften Einheit (5) zum Speichern einer Kette von bestätigten Blöcken (71-72), welche mindestens einen Abschnitt eines Transaktionsbuchs des verteilten Datenbanksystems (100) repräsentieren;
einer sechsten Einheit (6) zum Bestätigen genau eines aus einer Anzahl in dem verteilten Datenbanksystem (100) in einer jeweiligen Zeitscheibe bereitgestellter unbestätigter Blöcke (61, 62), so dass der bestätigte Block (73) an die Kette von bestätigten Blöcken (71-73) angefügt ist, wobei das Bestätigen des genau einen aus der Anzahl unbestätigter Blöcke ein Prüfen eines, mehrerer oder aller der unbestätigten Blöcke (61, 62), ein Auswählen eines der erfolgreich geprüften unbestätigten Blöcke (61, 62) und ein Anfügen des ausgewählten Blocks als der bestätigte Block (73) an die Kette von bestätigten Blöcken (71-73) umfasst; und
einer dritten Einheit (3) zum Empfangen eines Zeittakts von einer Zeitquelle (7) und Bestimmen von Zeitscheiben vorgegebener Länge anhand des Zeittakts;
wobei die sechste Einheit (6) dazu eingerichtet ist, das Bestätigen und das Anfügen innerhalb einer jeweiligen Zeitscheibe genau einmal durchzuführen.

7. Knoteneinrichtung nach Anspruch 6,
**dadurch gekennzeichnet,**
**dass** die sechste Einheit (6) dazu eingerichtet ist, den genau einen Block zum Bestätigen (61, 62) anhand mindestens eines der folgenden Kriterien auszuwählen:
- Anzahl und Art von in dem Block (61, 62) umfassten Transaktionen (41, 42, 43);
- Güte eines von dem Block umfassten kryptographischen Arbeitsnachweises (614);
- Güte und/oder rechnerische Komplexität einer jeweiligen von dem Block (61, 62) umfassten Transaktion (41, 42, 43);
- Übereinstimmung eines von dem Block (61, 62) umfassten Zeitstempels mit der jeweiligen Zeitscheibe; und/oder
- ob eine Blockbildungs-Einrichtung (10), welche den Block bereitgestellt hat, eine Blockbildungs-Einrichtung (10) ist, für die ein während der jeweiligen Zeitscheibe in dem verteilten Datenbanksystem (100) übertragenes Aktivierungssignal bestimmt ist.

8. Knoteneinrichtung nach Anspruch 6 oder 7,
**dadurch gekennzeichnet,**
**dass** die sechste Einheit (6) dazu eingerichtet ist, den genau einen Block (61, 62) zum Bestätigen anhand eines Kriteriums auszuwählen, ob der Block (61, 62) alle während der jeweiligen Zeitscheibe in dem verteilten Datenbanksystem (100) bereitgestellten unbestätigten Transaktionen (41, 42, 43) umfasst, die einer vordefinierten Bedingung entsprechen.

9. Knoteneinrichtung nach einem der Ansprüche 6 bis 8,
**dadurch gekennzeichnet,**
**dass** die Knoteneinrichtung (30, 31, 32) eine Blockbildungs-Einrichtung (10) nach einem der Ansprüche 1 bis 5 aufweist.

10. Verteiltes Datenbanksystem (100), umfassend eine Anzahl Knoteneinrichtungen (20, 30-32) nach einem der Ansprüche 6 bis 9, die dazu eingerichtet sind, gemeinsam das Transaktionsbuch des verteilten Datenbanksystems (100) zu verwalten, wobei mindestens eine der Knoteneinrichtungen (30-32) eine Blockbildungs-Einrichtung (10) nach einem der Ansprüche 1 bis 5 umfasst und die Anzahl Knoteneinrichtungen (20, 30-32) gemäß einem Zeittakt des verteilten Datenbanksystems zeitsynchronisiert betreibbar sind.

11. Verteiltes Datenbanksystem nach Anspruch 10,
**dadurch gekennzeichnet,**
**dass** das verteilte Datenbanksystem (100) ferner eine zentrale Zeitquelle (7) umfasst, wobei die Zeitquelle (7), von welcher die dritte Einheit (3, 203, 303, 313, 323) der jeweiligen Knoteneinrichtung (20, 30-32) den Zeittakt empfängt, die zentrale Zeitquelle (7) ist.

12. Industrielles Automatisierungssystem, umfassend ein verteiltes Datenbanksystem (100) nach Anspruch 10 oder 11 und eine Anzahl gemäß einem Zeittakt betreibbare Automatisierungskomponenten,
wobei das verteilte Datenbanksystem (100) zum Regeln und/oder Steuern der Anzahl Automatisierungskomponenten betreibbar ist,
wobei der Zeittakt des verteilten Datenbanksystems (100) synchron mit dem Zeittakt der Anzahl Automatisierungskomponenten oder einem ganzzahligen Vielfachen des Zeittakts der Anzahl Automatisierungskomponenten ist.

13. Blockbildungs-Verfahren für ein eine Anzahl Knoteneinrichtungen (20, 30-32) umfassendes verteiltes Datenbanksystem (100) mit:
Auswählen (S10) einer Anzahl zu bestätigender Transaktionen aus einer in dem verteilten Datenbanksystem (100) bereitgestellten Anzahl unbestätigter Transaktionen (41, 42, 43);
Bilden (S21) eines unbestätigten Blocks (61) aus der ausgewählten Anzahl unbestätigter Transaktionen (41, 42, 43), wobei eine jeweilige ausgewählte unbestätigte Transaktion (41-43) auf Gültigkeit geprüft und bei nicht bestanderer Prüfung verworfen, andernfalls in den unbestätigten Block (61) aufgenommen wird, und Bereitstellen (S22) des unbestätigten Blocks (61) in dem verteilten Datenbanksystem (100); und
Empfangen (S30) eines Zeittakts von einer Zeitquelle (7) und Bestimmen von Zeitscheiben vorgegebener Länge (ΔT) anhand des Zeittakts;
wobei das Auswählen (S10), das Bilden (S21) und das Bereitstellen (S22) innerhalb einer jeweiligen Zeitscheibe genau einmal erfolgen.

14. Blockbestätigungs-Verfahren für ein eine Anzahl Knoteneinrichtungen (20, 30-32) umfassendes verteiltes Datenbanksystem (100) mit:
Speichern (S50) einer Kette von bestätigten Blöcken (71-72), welche ein Hauptbuch einer verteilten Datenbank (100) repräsentieren;
Bestätigen (S60) genau eines aus einer Anzahl in dem verteilten Datenbanksystem (100) in einer jeweiligen Zeitscheibe bereitgestellter unbestätigter Blöcke (61, 62), wobei der bestätigte Block (73) an die Kette von bestätigten Blöcken (71-73) angefügt wird, wobei das Bestätigen des genau einen aus der Anzahl unbestätigter Blöcke ein Prüfen eines, mehrerer oder aller der unbestätigten Blöcke (61, 62), ein Auswählen eines der erfolgreich geprüften unbestätigten Blöcke (61, 62) und ein Anfügen des ausgewählten Blocks als der bestätigte Block (73) an die Kette von bestätigten Blöcken (71-73) umfasst; und
Empfangen (S30) eines Zeittakts von einer Zeitquelle (7) und Bestimmen von Zeitscheiben vorgegebener Länge anhand des Zeittakts;
wobei das Bestätigen und das Anfügen (S60) innerhalb einer jeweiligen Zeitscheibe genau einmal erfolgt.

15. Computerprogrammprodukt, welches auf einer programmgesteuerten Einrichtung die Durchführung eines Verfahrens nach Anspruch 13 oder 14 veranlasst.

## Claims

1. Block formation device (10) for a distributed database system (100) comprising a number of node devices (20, 30-32), having:
a first unit (1) for selecting a number of transactions to be confirmed from a number of unconfirmed transactions (41-43) provided in the distributed database system;
a second unit (2) for forming an unconfirmed block (61, 62) from the selected number of unconfirmed transactions (41-43), wherein a respective selected unconfirmed transaction (41-43) is inspected in terms of validity and discarded in the event of a failed inspection, and otherwise is incorporated into the unconfirmed block (61, 62), and for providing the unconfirmed block (61, 62) in the distributed database system (100); and
a third unit (3) for receiving a timing cycle from a time source (7) and for determining time slices of a predefined length (ΔT) on the basis of the timing cycle;
wherein the first unit (1) and the second unit (2) are configured so as to perform the selection, the formation and the provision exactly once within a respective time slice.

2. Block formation device according to Claim 1, **characterized in that**
the first unit (1) is configured, during the respective time slice, so as to select all of the unconfirmed transactions (41-43) provided in the distributed database system (100) that correspond to a predefined condition as transactions to be confirmed.

3. Block formation device according to Claim 1 or 2, **characterized by**
a fourth unit (304, 314, 324) for receiving an activation signal,
wherein the first unit (1) and the second unit (2) are configured so as to perform the selection, the formation and the provision exactly once within the respective time slice only when the fourth unit (304, 314, 324) receives the activation signal in the respective time slice.

4. Block formation device according to one of Claims 1 to 3, **characterized in that**
the second unit (2) is configured so as to record, in the block (61) that is formed, a cryptographic proof of work (614) that it is best able to determine within the respective time slice.

5. Block formation device according to one of Claims 1 to 4, **characterized in that**
the second unit (2) is configured so as to record, in the block (61) that is formed, a timestamp (612) that identifies the respective time slice.

6. Node device (20, 30-32) for a distributed database system (100) comprising a number of node devices (20, 30-32), having:
a fifth unit (5) for storing a chain of confirmed blocks (71-72) that represent at least one section of a transaction ledger of the distributed database system (100);
a sixth unit (6) for confirming exactly one of a number of unconfirmed blocks (61, 62) provided in a respective time slice in the distributed database system (100), such that the confirmed block (73) is appended to the chain of confirmed blocks (71-73), wherein the confirmation of the exactly one of the number of unconfirmed blocks comprises inspecting one, several or all of the unconfirmed blocks (61, 62), selecting one of the successfully inspected unconfirmed blocks (61, 62) and appending the selected block, as the confirmed block (73), to the chain of confirmed blocks (71-73); and
a third unit (3) for receiving a timing cycle from a time source (7) and determining time slices of a predefined length on the basis of the timing cycle;
wherein the sixth unit (6) is configured so as to perform the confirmation and the appendage exactly once within a respective time slice.

7. Node device according to Claim 6,
**characterized in that**
the sixth unit (6) is configured so as to select the exactly one block for confirmation (61, 62) on the basis of at least one of the following criteria:
- number and type of transactions (41, 42, 43) contained in the block (61, 62);
- quality of a cryptographic proof of work (614) contained in the block;
- quality and/or computational complexity of a respective transaction (41, 42, 43) contained in the block (61, 62);
- match between a timestamp contained in the block (61, 62) and the respective time slice; and/or
- whether a block formation device (10) that provided the block is a block formation device (10) for which an activation signal transmitted in the distributed database system (100) during the respective time slice is determined.

8. Node device according to Claim 6 or 7,
**characterized in that**
the sixth unit (6) is configured so as to select the exactly one block (61, 62) for confirmation on the basis of a criterion as to whether the block (61, 62) contains all of the unconfirmed transactions (41, 42, 43) provided in the distributed database system (100) during the respective time slice that correspond to a predefined condition.

9. Node device according to one of Claims 6 to 8, **characterized in that**
the node device (30, 31, 32) has a block formation device (10) according to one of Claims 1 to 5.

10. Distributed database system (100), comprising a number of node devices (20, 30-32) according to one of Claims 6 to 9 that are configured so as to jointly manage the transaction ledger of the distributed database system (100), wherein at least one of the node devices (30-32) comprises a block formation device (10) according to one of Claims 1 to 5 and the number of node devices (20, 30-32) are able to be operated synchronously in time in accordance with a timing cycle of the distributed database system.

11. Distributed database system according to Claim 10, **characterized in that**
the distributed database system (100) furthermore comprises a central time source (7), wherein the time source (7) from which the third unit (3, 203, 303, 313, 323) of the respective node device (20, 30-32) receives the timing cycle is the central time source (7).

12. Industrial automation system comprising a distributed database system (100) according to Claim 10 or 11 and a number of automation components able to be operated in accordance with a timing cycle,
wherein the distributed database system (100) is able to be operated so as to regulate and/or control the number of automation components,
wherein the timing cycle of the distributed database system (100) is synchronous with the timing cycle of the number of automation components or an integer multiple of the timing cycle of the number of automation components.

13. Block formation method for a distributed database system (100) comprising a number of node devices (20, 30-32), comprising:
selecting (S10) a number of transactions to be confirmed from a number of unconfirmed transactions (41, 42, 43) provided in the distributed database system (100);
forming (S21) an unconfirmed block (61) from the selected number of unconfirmed transactions (41, 42, 43), wherein a respective selected unconfirmed transaction (41-43) is inspected in terms of validity and discarded in the event of a failed inspection, and otherwise is incorporated into the unconfirmed block (61), and providing (S22) the unconfirmed block (61) in the distributed database system (100); and
receiving (S30) a timing cycle from a time source (7) and determining time slices of a predefined length (ΔT) on the basis of the timing cycle;
wherein the selection (S10), the formation (S21) and the provision (S22) take place exactly once within a respective time slice.

14. Block confirmation method for a distributed database system (100) comprising a number of node devices (20, 30-32), comprising:
storing (S50) a chain of confirmed blocks (71-72) that represent a main ledger of a distributed database (100);
confirming (S60) exactly one of a number of unconfirmed blocks (61, 62) provided in a respective time slice in the distributed database system (100), wherein the confirmed block (73) is appended to the chain of confirmed blocks (71-73), wherein the confirmation of the exactly one of the number of unconfirmed blocks comprises inspecting one, several or all of the unconfirmed blocks (61, 62), selecting one of the successfully inspected unconfirmed blocks (61, 62) and appending the selected block, as the confirmed block (73), to the chain of confirmed blocks (71-73); and
receiving (S30) a timing cycle from a time source (7) and determining time slices of a predefined length on the basis of the timing cycle;
wherein the confirmation and the appendage (S60) take place exactly once within a respective time slice.

15. Computer program product that prompts a program-controlled device to perform a method according to Claim 13 or 14.

## Revendications

1. Dispositif de formation de blocs (10) pour un système de base de données (100) réparti comprenant plusieurs dispositifs de nœuds (20, 30-32), avec :
une première unité (1) pour la sélection de plusieurs transactions à confirmer parmi plusieurs transactions non confirmées (41-43) mises à disposition dans le système de base de données réparti ;
une deuxième unité (2) pour la formation d'un bloc non confirmé (61, 62) parmi la pluralité sélectionnée de transactions non confirmées (41-43), dans laquelle une transaction non confirmée (41-43) sélectionnée respective est vérifiée en ce qui concerne sa validité et, si la vérification est un échec, est rejetée, sinon elle est prise en compte dans le bloc non confirmé (61, 62) et pour la mise à disposition du bloc non confirmé (61, 62) dans le système de base de données réparti (100) ; et
une troisième unité (3) pour la réception d'une cadence temporelle en provenance d'une source temporelle (7) et pour la détermination de tranches temporelles d'une longueur (ΔT) prédéterminée à l'aide de la cadence temporelle ;
dans lequel la première unité (1) et la deuxième unité (2) sont conçues pour effectuer la sélection, la formation et la mise à disposition exactement une fois à l'intérieur d'une tranche temporelle respective.

2. Dispositif de formation de blocs selon la revendication 1,
**caractérisé en ce que**
la première unité (1) est conçue pour sélectionner, pendant la tranche temporelle respective, toutes les transactions non confirmées (41-43) mises à disposition dans le système de base de données réparti (100) qui correspondent à une condition prédéfinie, en tant que transactions à confirmer.

3. Dispositif de formation de blocs selon la revendication 1 ou 2,
**caractérisé par**
une quatrième unité (304, 314, 324) pour la réception d'un signal d'activation,
dans lequel la première unité (1) et la deuxième unité (2) sont conçues pour effectuer la sélection, la formation et la mise à disposition exactement une fois à l'intérieur de la tranche temporelle respective uniquement lorsque la quatrième unité (304, 314, 324) reçoit le signal d'activation dans la tranche temporelle respective.

4. Dispositif de formation de blocs selon l'une des revendications 1 à 3,
**caractérisé en ce que**
la deuxième unité (2) est conçue pour prendre en compte, dans le bloc formé (61), le meilleur certificat de travail cryptographique (614) pouvant être déterminé par elle à l'intérieur de la tranche temporelle respective.

5. Dispositif de formation de blocs selon l'une des revendications 1 à 4,
**caractérisé en ce que**
la deuxième unité (2) est conçue pour prendre en compte dans le bloc formé (61), un horodatage (612) qui identifie la tranche temporelle respective.

6. Dispositif de nœuds (20, 30-32) pour un système de base de données réparti (100) comprenant plusieurs dispositifs de nœuds (20, 30-32), avec :
une cinquième unité (5) pour l'enregistrement d'une chaîne de blocs confirmés (71-72) qui représentent au moins une portion d'un registre de transactions du système de base de données réparti (100) ;
une sixième unité (6) pour la confirmation d'exactement un parmi plusieurs blocs non confirmés (61, 62) mis à disposition dans le système de base de données réparti (100) dans une tranche temporelle respective, de façon à ce que le bloc confirmé (73) soit ajouté à la chaîne de blocs confirmés (71-73), dans laquelle la confirmation de l'exactement un bloc parmi les plusieurs blocs non confirmés comprend une vérification d'un, de plusieurs ou de tous les blocs non confirmés (61, 62), une sélection d'un des blocs non confirmés (61, 62) vérifiés avec succès et un ajout du bloc sélectionné en tant que bloc confirmé (73) à la chaîne de blocs confirmés (71-73) ; et
une troisième unité (3) pour la réception d'une cadence temporelle en provenance d'une source temporelle (7) et pour la détermination de tranches temporelles d'une longueur prédéterminée à l'aide de la cadence temporelle ;
dans lequel la sixième unité (6) est conçue pour effectuer la confirmation et l'ajout exactement une fois à l'intérieur d'une tranche temporelle respective.

7. Dispositif de nœuds selon la revendication 6, **caractérisé en ce que**
la sixième unité (6) est conçue pour sélectionner l'exactement un bloc pour la confirmation (61, 62) à l'aide d'au moins un des critères suivants :
- nombre et type de transactions (41, 42, 43) compris dans le bloc (61, 62) ;
- qualité d'un certificat de travail cryptographique (614) compris dans le bloc ;
- qualité et/ou complexité de calcul d'une transaction (41, 42, 43) respective compris dans le bloc (61, 62) ;
- coïncidence d'un horodatage compris dans le bloc (61, 62) avec la tranche temporelle respective ; et/ou
- si un dispositif de formation de blocs (10), qui a mis à disposition le bloc, est un dispositif de formation de blocs (10) pour lequel un signal d'activation transmis pendant la tranche temporelle respective dans le système de base de données réparti (100) est déterminé.

8. Dispositif de nœuds selon la revendication 6 ou 7, **caractérisé en ce que**
la sixième unité (6) est conçue pour sélectionner l'exactement un bloc (61, 62) pour la confirmation à l'aide d'un critère : si le bloc (61, 62) comprend toutes les transactions non confirmées (41, 42, 43) mises à disposition pendant la tranche temporelle dans le système de base de données réparti (100) qui correspondent à une condition prédéfinie.

9. Dispositif de nœuds selon l'une des revendications 6 à 8,
**caractérisé en ce que**
le dispositif de nœuds (30, 31, 32) comprend un dispositif de formation de blocs (10) selon l'une des revendications 1 à 5.

10. Système de base de données réparti (100), comprenant plusieurs dispositifs de nœuds (20, 30-32) selon l'une des revendications 6 à 9, qui sont conçus pour gérer ensemble le registre de transactions du système de base de données réparti (100), dans lequel au moins un des dispositifs de nœuds (30-32) comprend un dispositif de formation de blocs (10) selon l'une des revendications 1 à 5 et les plusieurs dispositifs de nœuds (20, 30-32) peuvent fonctionner de manière synchronisée selon une cadence temporelle du système de base de données réparti.

11. Système de base de données réparti selon la revendication 10,
**caractérisé en ce que**
le système de base de données réparti (100) comprend en outre une source temporelle centrale (7), dans lequel la source temporelle (7), dont la troisième unité (3, 203, 303, 313, 323) du dispositif de nœuds (20, 30-32) respectif reçoit la cadence temporelle, est la source temporelle centrale (7).

12. Système d'automatisation industrielle comprenant un système de base de données réparti (100) selon la revendication 10 ou 11 et plusieurs composants d'automatisation pouvant fonctionner selon une cadence temporelle,
dans lequel le système de base de données réparti (100) peut fonctionner pour la régulation et/ou le contrôle des plusieurs composants d'automatisation,
dans lequel la cadence temporelle du système de base de données réparti (100) est synchrone avec la cadence temporelle de la pluralité de composants d'automatisation ou un multiple entier de la cadence temporelle de la pluralité de composants d'automatisation.

13. Procédé de formation de blocs pour un système de base de données réparti (100) comprenant plusieurs dispositifs de nœuds (20, 30-32), avec :
la sélection (S10) de plusieurs transactions à confirmer parmi plusieurs transactions non confirmées (41, 42, 43) mises à disposition dans le système de base de données réparti (100) ;
la formation (S21) d'un bloc non confirmé (61) parmi la pluralité de transactions non confirmées (41, 42, 43) sélectionnées, dans laquelle une transaction non confirmée (41-43) sélectionnée respective est vérifiée en ce qui concerne sa validité et, si la vérification est un échec, est rejetée, sinon elle est prise en compte dans le bloc non confirmé (61) et la mise à disposition (S22) du bloc non confirmé (61) dans le système de base de données réparti (100) ; et
la réception (S30) d'une cadence temporelle en provenance d'une source temporelle (7) et la détermination de tranches temporelles d'une longueur prédéterminée (ΔT) à l'aide de la cadence temporelle ;
dans lequel la sélection (S10), la formation (S21) et la mise à disposition (S22) ont lieu exactement une fois à l'intérieur d'une tranche temporelle respective.

14. Procédé de confirmation de blocs pour un système de base de données réparti (100) comprenant plusieurs dispositifs de nœuds (20, 30-32), avec :
l'enregistrement (S50) d'une chaîne de blocs confirmés (71-72) qui représente un registre principal d'une base de données répartie (100) ;
la confirmation (S60) d'exactement un bloc parmi plusieurs blocs non confirmés (61, 62) mis à disposition dans le système de base de données réparti (100) dans une tranche temporelle respective, dans lequel le bloc confirmé (73) est ajouté à la chaîne de blocs confirmés (71-73), dans lequel la confirmation de l'exactement un bloc parmi la pluralité de blocs non confirmés comprend une vérification d'un, de plusieurs ou de tous les blocs non confirmés (61, 62), une sélection d'un des blocs non confirmés (61, 62) vérifiés avec succès et un ajout du bloc sélectionné en tant que bloc confirmé (73) à la chaîne de blocs confirmés (71-73) ; et
la réception (S30) d'une cadence temporelle en provenance d'une source temporelle (7) et la détermination de tranches temporelles d'une longueur prédéterminée à l'aide de la cadence temporelle ;
dans lequel la confirmation et l'ajout (S60) ont lieu exactement une fois dans une tranche temporelle respective.

15. Produit de programme informatique qui permet l'exécution, sur un dispositif contrôlé par un programme, d'un procédé selon la revendication 13 ou 14.
